# EUROPEAN PATENT SPECIFICATION

(11) **EP 1 726 520 B1**
(45) Date of publication and mention of the grant of the patent: **23.04.2008**
(21) Application number: 06010556.6
(22) Date of filing: 22.05.2006
(51) Int. Cl.: B62M 25/04, B62K 23/04

(54) **Shift operation device for bicycle**
Betätigungsvorrichtung für eine Fahrradgangschaltung
Dispositif de commande de changement de vitesse pour bicyclette

(30) Priority: 23.05.2005 JP 2005149615; 30.11.2005 JP 2005346205
(43) Date of publication of application: 29.11.2006
(73) Proprietor: SHIMANO INC., Osaka 590-8577 (JP)
(72) Inventor: Kawakami, Tatsuya, Sakai Osaka 590-8577 (JP); Watarai, Etsuyoshi, Sakai-ku, Sakai City Osaka 590-8577 (JP)
(74) Representative: Hofmann, Harald

(56) References cited:
- EP-A1- 0 485 955
- EP-A1- 0 601 211
- JP-B2- 2 730 555
- US-A- 5 222 412

## Description

### [Field of the Invention]

The present invention relates to a shift operation device, and more particularly to a shift operation device for a bicycle that is mounted to a frame of the bicycle for performing a shift operation for switching among a plurality of shift positions of a shift device connected by a shift cable.

### [Prior Art]

Some bicycles include a shift device such as an internal shift device or an external shift device. For a shift operation of such a shift device, a shift operation device connected to the shift device via a shift cable has been used. A conventionally known shift operation device is of an operation member type including a winding operation member and a releasing operation member in the form of an operation member that oscillates. As the shift operation device of the operation member type, a technique for oscillably operating the winding operation member and the releasing operation member in the same direction (for example, see Japanese Patent No. 2730555) and a technique for oscillably operating the operation members in different directions (for example, see Japanese Patent No. 3065656) are known. In the former conventional technique, the winding operation member and the releasing operation member are operated in a direction of being pressed with a thumb to cause a shift cable to be wound or released for shifting. In the latter conventional technique, the winding operation member is operated in a direction of being pressed with a thumb to cause a shift cable to be pulled in a winding direction on a step-by-step basis for shifting, and the winding operation member is operated in a direction of being pulled with an index finger to cause the shift cable to return to a releasing direction for shifting. In EP 0 601 211 A1, a bicycle brake and shift operation member assembly comprises a cable winding member, a cable releasing mechanism, a transmission mechanism, where the cable winding member rotates with the speed lever when the speed lever is moved from a neutral position to an operation position, in a wire winding direction or in a wire paying out direction. EP 0601211 discloses a shift operation device according to preamble of claim 1.

### [Disclosure of the Invention]

### [Problem to be Solved by the Invention]

In both the conventional techniques, the operation direction of the winding operation member is the direction of being pressed with the thumb. The operation direction of the releasing operation member is the same direction as the winding operation member in the former technique, and a different direction from the winding operation member in the latter technique. The operation directions of the winding operation member and the releasing operation member are sometimes desired to be changed in response to rider's preference. For both the conventional techniques, however, the operation direction of the operation member is limited to a fixed direction and cannot be suited to the rider's preference.

An object of the present invention is to provide a shift operation device for a bicycle having an operation member that can suit an operation direction of the operation member to rider's preference.

### [Means for Solving the Problems]

A shift operation device for a bicycle according to the invention includes: a mounting portion mountable to the bicycle; a cable lock body; a position holding and releasing mechanism; and a first operation member. The cable lock body is mounted to the mounting portion movably to a cable pulling direction and a cable releasing direction. The position holding and releasing mechanism selectively holds the cable lock body in any one of a plurality of holding positions. The first operation member is mounted to the mounting portion movably in a first direction and a second direction, and operates the position holding and releasing mechanism in response to the movement in the first direction and the second direction to move the cable lock body in only one of said two different directions, namely the cable releasing direction, respectively.

In the shift operation device, when the first operation member is moved in the first direction or the second direction, the position holding and releasing mechanism is operated in response to the movement to move the cable lock body in the cable releasing direction. The cable lock body can be moved in the cable releasing direction when the first operation member is moved in any of the first direction and the second direction, and thus an operation direction of a cable releasing operation by the first operation member can be suited to rider's preference.

In the shift operation device for a bicycle, the position holding and releasing mechanism preferably can shift the holding position of the cable lock body by a plurality of positions in response to the movement of the first operation member in at least any one of the first direction and the second direction. In this case, shift by the plurality of positions can be collectively performed, and thus a plurality of steps of the shift device can be collectively shifted, thereby achieving a quick shift operation.

Preferably, the first operation member has a neutral position, and is moved in the first direction and the second direction from the neutral position. In this case, the cable releasing operation can be performed by operating the first operation member in any direction from the neutral position.

In the shift operation device for a bicycle, the first operation member may include an input member movable in the first direction and the second direction, and a drive member that is moved by the input member to operate the position holding and releasing mechanism. In this case, the first operation member is constituted by the two members: the input member and the drive member, and thus the drive member can be moved to different positions by the input member moving from the same position, thereby allowing a shift operation to be always performed in the same position. This also contributes to design freedom.

Preferably the first operation member further includes a first one-way clutch and a second one-way clutch placed between the input member and the drive member. In this case, movement of the input member in the opposite directions can be efficiently transmitted to the drive member.

The first one-way clutch may transmit only the movement of the input member in the first direction to the drive member, and the second one-way clutch transmits only the movement of the input member in the second direction to the drive member. In this case, the movement of the input member in the first direction and the second direction can be reliably transmitted to the drive member.

Preferably, the position holding and releasing mechanism includes a first ratchet that is moved integrally with the cable lock body, and a positioning member that engages the first ratchet and holds the cable lock body in any one of the plurality of holding positions. In this case, the positioning member can reliably hold and release the position of the cable lock body.

The position holding and releasing mechanism may further includes a releasing member that is moved in a third direction in response to the movement of the first operation member in the first direction and the second direction to release the engagement between the first ratchet and the positioning member. In this case, the movement of the releasing member in the third direction allows the engagement between the positioning member and the first ratchet to be easily released.

Advantageously, the drive member may have a plurality of first angle protrusions each having first inclined surfaces on opposite sides thereof, the releasing member is provided in the mounting portion movably in a direction approaching and separating from the drive member between the drive member and the cable lock body and has second angle protrusions each having second inclined surfaces that engage the first inclined surfaces of the first angle protrusion, and the device further includes a first urging member that urges the releasing member toward the drive member. In this case, when the drive member moves in the first direction or the second direction, the second angle protrusions of the releasing member urged toward the drive member by the first urging member are moved in the third direction approaching and separating from the drive member while engaging the first angle protrusions to release the engagement between the positioning member and the first ratchet. The releasing member performs the same operation when the drive member is moved in any direction by the engagement between the angle protrusions, thereby allowing the same cable releasing operation to be performed by operating the first operation member in opposite directions.

The shift operation device for a bicycle may further include a second urging member that urges the cable lock body in the cable releasing direction. In this case, releasing the positioning of the cable lock body causes the cable lock body to be easily moved in the cable releasing direction by the second urging member.

The shift operation device for a bicycle may further include a second operation member that is movably mounted to the mounting portion and moves the cable lock body in the cable pulling direction. In this case, a pulling operation of the cable lock body can be performed by the second operation member.

Preferably, the mounting portion may include a first oscillation shaft and a second oscillation shaft spaced apart from the first oscillation shaft, and the input member oscillates around the first oscillation shaft in the movement in the first direction, and around the second oscillation shaft in the movement in the second direction. In this case, the input member is rotated around the two shafts according to the two operation directions, and thus the center of rotation can be freely changed according to placement of the two oscillation shafts.

Preferably, the input member has an arcuate first slot that engages the first oscillation shaft, and an arcuate second slot that engages the second oscillation shaft, and the device further includes a third urging member that urges the input member so that the first and second oscillation shafts are placed in one ends of the slots. In this case, the oscillation shafts can be easily switched by the third urging member according to the operation directions.

The device mayfurther includes a support shaft mounted to the mounting portion and placed in parallel with the first and second oscillation shafts, and the cable lock body is rotated around the support shaft. In this case, the three shafts are placed in parallel with each other, and thus the shift operation and the position holding and releasing operation can be easily cooperated with each other.

Preferably, the position holding and releasing mechanism includes a positioning unit integrally rotatable with the cable lock body and having a plurality of positioning teeth, a positioning pawl that oscillates between a first engaging position for engagement with the positioning teeth and a first releasing position for release from the positioning teeth, and a rotation preventing pawl that is movable relative to the positioning pawl within a predetermined range, and placed in a second releasing position for separation from the positioning teeth when the positioning pawl is placed in the first engaging position, and in a second engaging position for engagement with the positioning teeth when the positioning pawl is placed in the first releasing position, and selectively holds the cable lock body in any one of a plurality of holding positions.

In this case, when the input member is operated at least in the first direction, the drive member is moved in the position spaced apart from the shaft member along with the operation in the first direction, and the first operation portion of the drive member engages the positioning pawl to cause the positioning pawl to oscillate from the first engaging position to the first releasing position. This causes the rotation preventing pawl to be.moved from the second releasing position to the second engaging position to rotate the positioning unit in the cable releasing direction until the positioning unit comes into contact with the second engaging position. Then, when the positioning teeth come into contact with the rotation preventing pawl, the rotation preventing pawl is moved within the predetermined range to release the engagement between the operation portion and the positioning pawl. This causes the positioning pawl to be moved to the first engaging position and come into contact with the positioning teeth, and the positioning unit is rotated in the cable releasing direction by one shift step and stopped instantaneously. When the next operation portion engages the positioning pawl, the positioning pawl is again moved to the first releasing position, further rotated in the cable releasing direction until the positioning unit comes into contact with the rotation preventing pawl. Then, the engagement of the operation portion is released, and the positioning pawl comes into contact with the positioning unit, and is further rotated in the cable releasing direction by one shift step and stopped instantaneously. When the further next operation portion engages the positioning pawl, the same operation is repeated. Thus, multistage releasing operations are performed the same number of times as the number of the operation portions at the maximum. The drive member for the multistage releasing operations is movably mounted to the mounting portion in the position spaced apart from the shaft member. Here, the plurality of operation portions placed in a line in the drive member placed in the position spaced apart from the shaft member engage the positioning pawl to cause the positioning pawl to oscillate to the first releasing position, the movement of the rotation preventing pawl within the predetermined range releases the engagement between the drive member and the positioning pawl to cause the positioning pawl to oscillate to the first engaging position, and thus no structure for the multistage releasing is placed on the shaft member on which the positioning unit and the cable lock body are placed. This prevents the increase in the axial length of the shaft member, and allows the multistage releasing without increasing the thickness of the device.

Advantageously, each of the plurality of operation portions includes an engaging portion that engages the positioning pawl, and an engagement releasing portion that releases the engagement with the positioning pawl at the engaging portion by the movement of the rotation preventing pawl within the predetermined range. In this case, the portion that engages the positioning pawl and the portion that release the engagement with the positioning pawl are separately provided in the releasing portion, thereby facilitating the engagement and the release of the engagement.

Preferably, the rotation preventing pawl is rotated relative to the positioning pawl within the predetermined range by the positioning teeth when the rotation preventing pawl is placed in the second engaging position. In this case, the rotation preventing pawl can be rotated within the predetermined range by the positioning teeth of the positioning unit to release the engagement between the operation portion and the positioning pawl, thereby simplifying a structure of the position holding and releasing mechanism.

The cable lock body may be mounted to the mounting portion movably along a first plane, the position holding and releasing mechanism includes a positioning unit having a plurality of positioning teeth, and a positioning pawl that is moved along a surface parallel to the first plane between an engaging position for engagement with the positioning teeth and a releasing position for release from the positioning teeth, and selectively holds the cable lock body in any one of a plurality of holding positions, and the input member is mounted to the mounting portion movably in the first direction and the second direction, and operates the positioning pawl of the position holding and releasing mechanism according to the movement in the first direction and the second direction to move the cable lock body in the cable releasing direction.

In this case, when the input member is moved in any of the first direction and the second direction, the positioning pawl is operated along the surface parallel to the first plane to move the cable lock body in the cable releasing direction. Here, the cable lock body can be moved in the cable releasing direction by the movement of the input member in any of the first direction and the second direction, and thus an operating direction of the input member can be suited to rider' s preference. Also, the cable lock body and the positioning pawl are placed in parallel, which can make the shift operation device compact.

The input member may further be tiltable in a plurality of directions including the first direction and the second direction from the neutral position, and the drive member includes a connecting member that connects the input member and the positioning pawl to move the positioning pawl to the releasing position according to the tilt of the input member. In this case, the cable releasing operation can be performed via the connecting member by tilting the input member in any of the plurality of directions.

A shift operation device for a bicycle may further include: a cable lock body movable in two different directions; a position holding and releasing mechanism; and a first operation member. The position holding and releasing mechanism selectively holds the cable lock body in any one of a plurality of holding positions corresponding to a plurality of shift positions. The first operation member is movable in a first direction and a second direction, and operates the position holding and releasing mechanism in response to the movement in the first direction and the second directions to move the cable lock body to only one of the two different directions.

In the shift operation device, when the first operation member is moved in the first direction or the second direction, the position holding and releasing mechanism is operated in response to the movement to move the cable lock body in any of the two different directions. The cable lock body can be moved in any one direction when the first operation member is moved in any of the first direction and the second direction, and thus an operation direction of a cable releasing operation or a cable winding operation by the first operation member can be suited to rider's preference.

Advantageously, the first operating member has first and second operation surfaces for operations in the first and second directions. In this case, the operations in the first and second directions can be easily performed.

### [Advantages of the Invention]

According to the present invention, the cable lock body can be moved in the cable releasing direction when the first operation member is moved in any of the first direction and the second direction, and thus the operation direction of the cable releasing operation by the first operation member can be suited to the rider's preference.

### [Embodiments]

### <First embodiment>

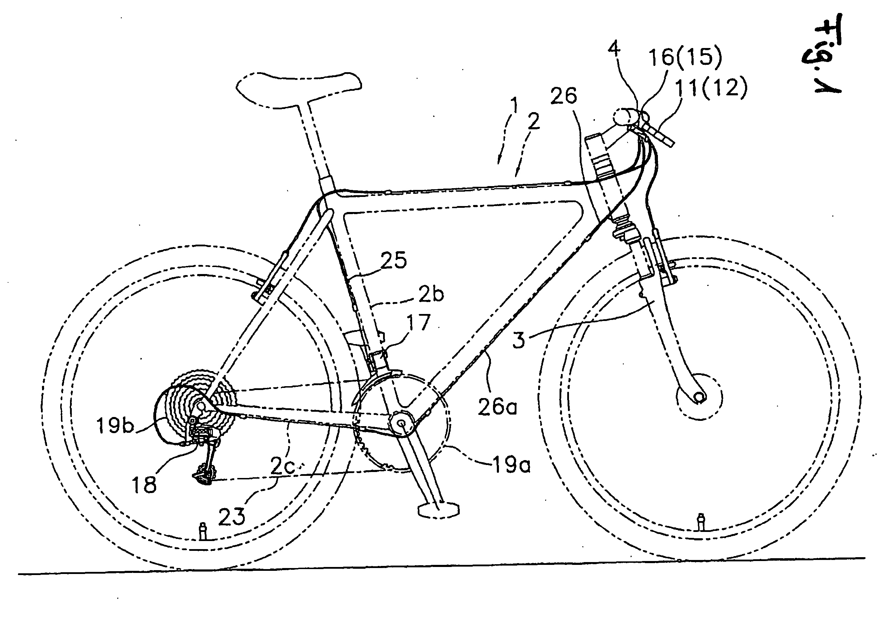

In Figure 1, a bicycle 1 including an embodiment of the present invention includes a frame 2 having a suspension fork 3 and a handlebar 4 secured to an upper portion of the suspension fork 3. A front derailleur 17 that constitutes an external shift device is mounted to a middle portion of the frame 2, and a rear derailleur 18 is mounted to a rear end of the frame 2. The front derailleur 17 is placed, for example, in a lower portion of a seat tube 2b of the frame 2, and guides a chain 23 to any one of sprockets of a front gear 19a having, for example, three sprockets. The rear derailleur 18 is placed in a rear end of a chain stay 2c of the frame 2, and guides the chain 23 to any one of sprockets of a rear gear 19b having, for example, nine sprockets. The front derailleur 17 and the rear derailleur 18 are connected to a front shift operation portion 15 and a rear shift operation portion 16 (an example of a shift operation device) via a front shift cable 25 and a rear shift cable 26.

The front shift operation portion 15 and the rear shift operation portion 16 are placed near brake levers 12 and 11 in the handlebar 4. The front shift operation portion 15 and the rear shift operation portion 16 are related as object and mirror image, and configurations and operations thereof are substantially the same except the number of shift steps. Thus, the rear shift operation portion 16 will be described below for the description of the configuration and the operation.

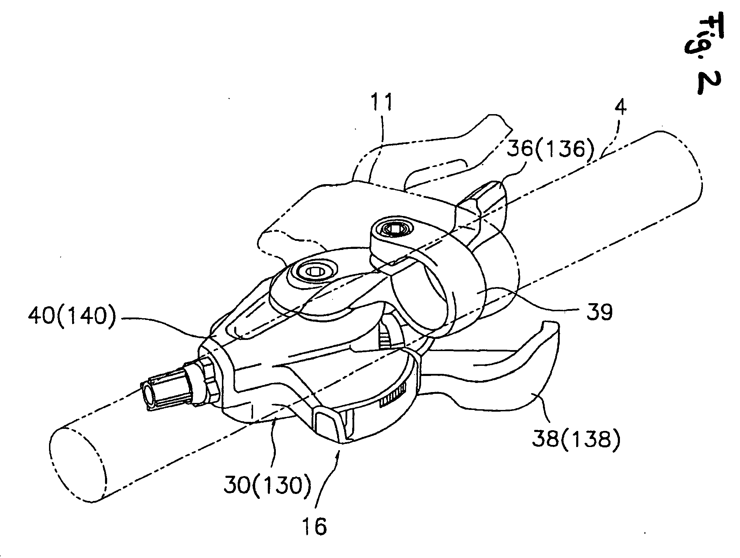

As shown in Figure 2, the rear shift operation portion 16 includes a mounting portion 30 mountable to the handlebar 4 inside the front brake lever 11. The mounting portion 30 may be integrally secured to a bracket of the front brake lever 11.

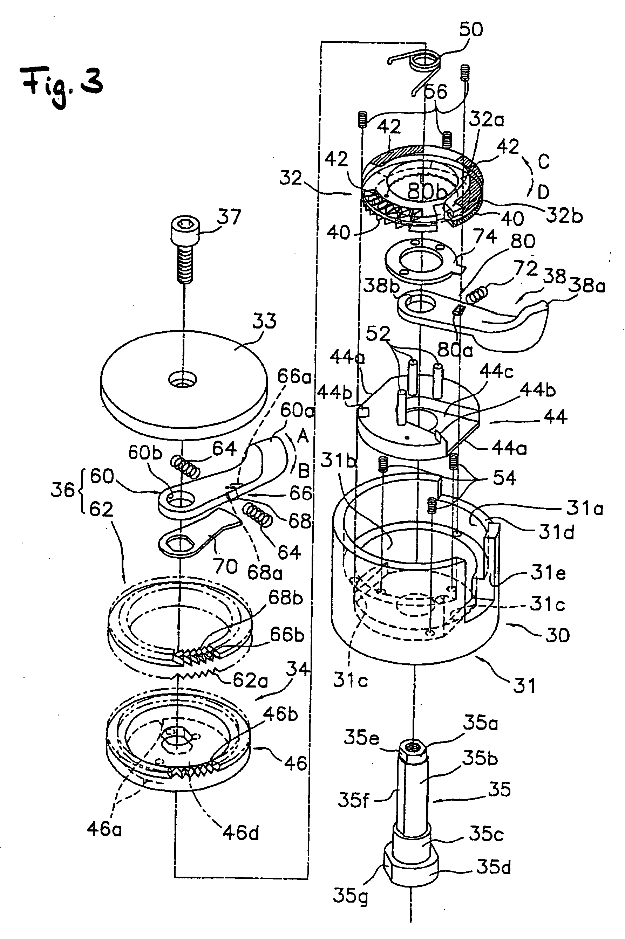

As shown in Figure 3, the rear shift operation portion 16 includes a winding body 32 (an example of a cable lock body) mounted to the mounting portion 30 movably in a cable pulling direction and a cable releasing direction of the shift cable 26, a position holding and releasing mechanism 34 that selectively holds the winding body 32 in any one of a plurality of holding positions corresponding to a plurality of shift positions, a releasing lever 36 (an example of a first operation member) for a cable releasing operation, and a winding lever 38 (an example of a second operation member) for a cable winding operation. Figure 3 schematically shows essential portions of the mounting portion 30.

The mounting portion 30 includes a closed-end cylindrical body portion 31 having two cylindrical large and small accommodation spaces 31a and 31b therein, a cover member 33 covering the body portion 31, and a mounting shaft 35 for fastening the cover member 33 to the body portion 31. To the accommodation space 31 b having a small diameter near a bottom of the body portion 31, the winding body 32 is mounted rotatably in a cable winding direction (a direction indicated by a counterclockwise arrow C in Figure 3) and a cable releasing direction (a direction indicated by a clockwise arrow D in Figure 3). The mounting portion 30 includes a band 39 (Figure 2) to be secured to the handlebar 4. A pair of protrusions 31c parallel to each other for preventing rotation of a positioning member 44 described later is formed in a bottom of the accommodation space 31b. The cover member 33 is a disk-shaped member, and covers an upper surface of the body portion 31. The mounting shaft 35 is a shaft member with steps, and extends upward through the body portion 31. A mounting bolt 37 is screwed into a tip of the mounting shaft 35 to cause the cover member 33 to cover the body portion 31. The mounting shaft 35 is the shaft with the steps having a small diameter portion 35a in the tip, a middle diameter portion 35b in the middle, a large diameter portion 35c in a base, and a flange 35d formed in the base, and the small diameter portion 35a, the middle diameter portion 35b, and the flange 35d have chamfers 35e, 35f and 35g parallel to one another for preventing rotation. The chamfer 35g engages the body portion 31 so that the mounting shaft 35 is nonrotatable with respect to the body portion 31.

The winding body 32 is, for example, a ring-shaped metal member, and mounted to the accommodation space 31b rotatably on the protrusions 31c. The winding body 32 includes, in an outer peripheral surface thereof, an inner lock portion 32a that locks a cable nipple (not shown) secured to a tip of an inner cable 26a (Figure 1) of the rear shift cable 26, and a cable winding groove 32b for winding the inner cable 26a. The winding body 32 is urged in the cable releasing direction by a torsion coil spring 50 (an example of a second urging member). The torsion coil spring 50 has one end locked to the winding body 32 and the other end locked to the positioning member 44 described later. A first ratchet 40 that constitutes the position holding and releasing mechanism 34 is formed in a first surface (a lower surface in Figure 3) of the winding body 32, and a second ratchet 42 that constitutes the position holding and releasing mechanism 34 is formed in a second surface (an upper surface in Figure 3) thereof. These ratchets 40 and 42 are formed in response to the number of shift steps and intervals between shift positions of the rear derailleur 18, and formed, with the same shape, in three positions at spaced intervals in a circumferential direction indicated by hatching in Figure 3. A fifth ratchet 80b that constitutes a third one-way clutch 80 described later is formed over the entire inner periphery of the first ratchet 40 in the lower surface of the winding body 32.

The position holding and releasing mechanism 34 includes the first and second ratchets 40 and 42 that are moved integrally with the winding body 32, the positioning member 44 that engages the first ratchet 40 to hold the winding body 32 in any one of the plurality of (for example, nine) holding positions, and a releasing member 46 that releases positioning by the positioning member 44.

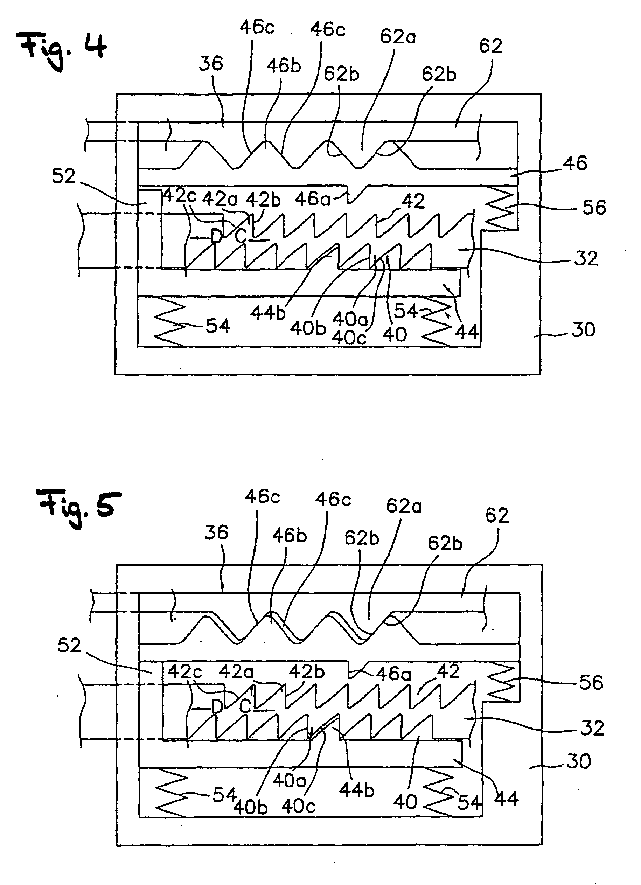

As schematically shown in Figure 4, the first and second ratchets 40 and 42 have serrated ratchet teeth 40a and 42a having different lock directions. In Figure 4, the ratchet teeth 40a and 42 are schematically shown to have the same length in moving directions, but actually have different lengths in response to the intervals between the shift positions of the rear derailleur 18. The numbers of the ratchet teeth 40a and 42a are determined in response to the number of the shift steps. In Figure 4, the cable winding direction is a right direction, and the cable releasing direction is a left direction. As described above, the winding body 32 is urged in the cable releasing direction (the left direction in Figure 4). Thus, each ratchet tooth 40a for positioning has, on a left side thereof, a vertical surface 40b that engages the positioning member 44 for positioning the winding body 32 against an urging force of the torsion coil spring 50, and an inclined surface 40c on a right side. On the other hand, each ratchet tooth 42a has a vertical surface 42b on a right side, and an inclined surface 42c on a left side.

The positioning member 44 is mounted to the accommodation space 31 b of the body portion 31 nonrotatably and vertically movably. The positioning member 44 is, for example, a disk-shaped member having chamfers 44a parallel to each other in opposite positions. The chamfers 44a engage the protrusions 31c, and the positioning member 44 is accommodated nonrotatably and vertically movably in the body portion 31. On an upper surface of the positioning member 44, for example, three rod-shaped contact members 52 contactable with the releasing member 46 are provided in a standing manner. The positioning member 44 has positioning pawls 44b that engage the first ratchet 40 in an upper surface thereof. The positioning pawls 44b are placed in three positions at circumferentially spaced intervals (one position is not shown) and formed to be folded and protrude upward. The positioning pawl 44b has a shape of the ratchet tooth 40a with a slightly smaller size and a lower height. The positioning member 44 is urged by, for example, three coil springs 54 in a direction approaching the winding body 32. The coil springs 54 are placed at circumferentially spaced intervals, and mounted to the bottom of the body portion 31. The positioning member 44 also has a lever accommodating recess 44c that accommodates the winding lever 38 while limiting an oscillation range thereof to within a predetermined range.

The releasing member 46 is a disk-shaped member, and placed above the winding body 32. The releasing member 46 is mounted vertically movably to the accommodation space 31a having a large diameter on an upper side of the body portion 31. The releasing member 46 engages the chamfer 35f formed in the middle diameter portion 35b of the mounting shaft 35 and is nonrotatably mounted to the mounting shaft 35. The releasing member 46 moves downward in Figure 3 to release the engagement between the first ratchet 40 and the positioning member 44. The releasing member 46 is urged upward to a drive member 62 described later of the releasing lever 36 by coil springs 56 (an example of a second urging member). The coil springs 56 are mounted to a step portion between the accommodation space 31a and the accommodation space 31b of the body portion 31. The releasing member 46 has releasing pawls 46a that engage the second ratchet 42 in a lower surface thereof. The releasing pawls 46a are placed in three positions at circumferentially spaced intervals (one position is not shown) and formed to be folded and protrude downward. Each releasing pawl 46a has a height slightly lower than that of the ratchet tooth 42a of the second ratchet 42. As schematically shown in Figure 4, second angle protrusions 46b that engage first angle protrusions 62a formed in the drive member 62 described later of the releasing lever 36 are formed over the entire periphery of an upper surface of the releasing member 46. Each second angle protrusion 46b has a shape of an isosceles triangle having second inclined surfaces 46c on opposite sides. A disk-shaped contact portion 46d contactable with the contact member 52 is formed in the center.

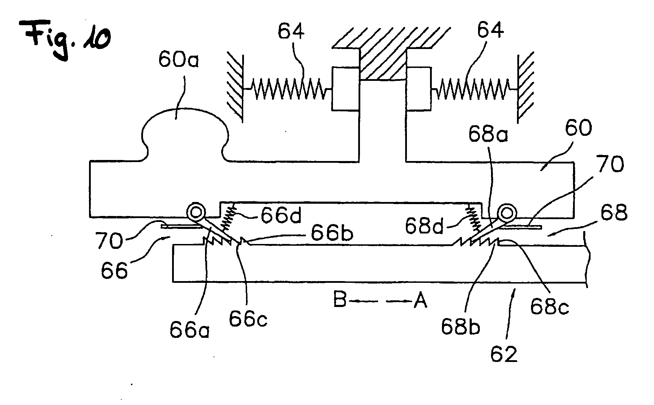

As shown in Figures 3 and 10, the releasing lever 36 is mounted to the mounting portion 30 movably in a first direction (a direction indicated by a counterclockwise arrow A in Figure 3) and a second direction (a direction indicated by a clockwise arrow B in Figure 3), and operates the position holding and releasing mechanism 34 in response to the movement in the first direction and the second direction to move the winding body 32 in the cable releasing direction. The releasing lever 36 includes a lever member 60 (an example of an input member) movable in the first direction and the second direction around the mounting shaft 35, and the drive member 62 moved by the lever member 60 to operate the position holding and releasing mechanism 34.

The lever member 60 is oscillably mounted to a step portion between the small diameter portion 35a at the tip of the mounting shaft 35 and the middle diameter portion 35b. An oscillation range of the lever member 60 is limited by a first notch 31d formed in the body portion 31. The lever member 60 has a sufficient length to protrude outside of the body portion 31, and has an operation portion 60a for a releasing operation in a tip thereof. A support hole 60b mounted to the small diameter portion 35a of the mounting shaft 35 is also formed in a base of the lever member 60. The lever member 60 is urged toward a neutral position by a pair of coil springs 64 placed on opposite sides thereof, and oscillated from the neutral position in both the first direction (a right direction indicated by an arrow A in Figure 10) and the second direction (a left direction indicated by an arrow B in Figure 10). An unshown positioning member for positioning the lever member 60 in the neutral position is placed between the lever member 60 and the small diameter portion 35a of the mounting shaft 35. The positioning member has, for example, a positioning pin mounted to the small diameter portion 35a retractably in a diametrical direction, and a positioning hole formed in an inner peripheral surface of the support hole 60b in engagement with the positioning pin.

A first one-way clutch 66 and a second one-way clutch 68 are placed between the lever member 60 and the drive member 62. The first one-way clutch 66 transmits only the movement of the lever member 60 in the first direction to the drive member 62, and the second one-way clutch 68 transmits only the movement of the lever member 60 in the second direction to the drive member 62. The first and second one-way clutches 66 and 68 include ratchet pawls 66a and 68a mounted to a lower surface of the lever member 60 oscillably to a standing position and a lying position, third and fourth ratchets 66b and 68b formed in an upper surface of the drive member 62 with lock surfaces 66c and 68c formed in different directions, and coil springs 66d and 68d that urge the ratchet pawls 66a and 68a toward the standing position. As shown in Figure 3, the ratchet pawls 66a and 68a are formed over the entire periphery of the upper surface of the drive member 62, and the ratchet pawl 68a is formed on an inner peripheral side of the ratchet pawl 66a. The first and second one-way clutches 66 and 68 include pressure plates 70 for preventing transmission of a one-way clutch 66 or 68 in an opposite direction to a moving direction when the lever member 60 is moved from the neutral position. For example, when the lever member 60 is operated in the first direction A, the ratchet pawl 68a of the second one-way clutch 68 is pressed to the lying position by the pressure plate 70 to prevent the second one-way clutch 68 from being operated to transmit only the movement of the lever member 60 in the first direction A to the drive member 62. As shown in Figure 3, the pressure plate 70 is nonrotatably mounted to the mounting shaft 35.

The drive member 62 is a ring-shaped member, and has the third and fourth ratchets 66b and 68b that constitute the first and second one-way clutches 66 and 68 formed in the upper surface thereof. The first angle protrusions 62a that engage the second angle protrusions 46b formed in the releasing member 46 are formed in the lower surface of the drive member 62. As shown in Figure 4, each first angle protrusion 62a has a shape of an isosceles triangle having first inclined surfaces 62b on opposite sides, and like a vertically inverted shape of the second angle protrusion 46b. The engagement between these triangles allows the releasing member 46 to be vertically moved to perform the same releasing operation when the drive member 62 is moved in any of the first direction and the second direction.

The winding lever 38 moves the winding body 32 in the cable winding direction. The winding lever 38 is accommodated in the lever accommodating recess 44c of the positioning member 44 between the positioning member 44 and the winding body 32, and oscillably mounted to a step portion between the middle diameter portion 35b and the large diameter portion 35c of the mounting shaft 35. An oscillation range of the winding lever 38 is limited by a second notch 31e formed in the body portion 31. The winding lever 38 extends in a different direction from the lever member 60 of the releasing lever 36, and has a sufficient length to protrude outside of the body portion 31. The winding lever 38 has an operation portion 38a for winding and releasing operations in a tip thereof. A support hole 38b mounted to the middle diameter portion 35b of the mounting shaft 35 is formed in a base of the winding lever 38. The winding lever 38 is urged to a clockwise operation start position in Figure 3 by a coil spring 72 placed on one side, and oscillated between the operation start position and an operation finish position limited by the second notch 31e. Then, after the operation, the winding lever 38 returns to the operation start position.

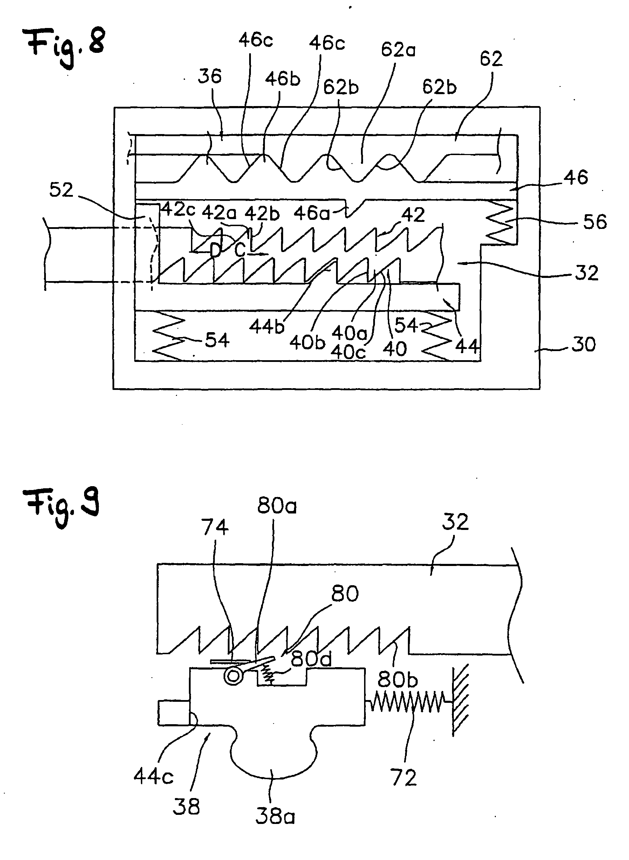

A third one-way clutch 80 is placed between the winding body 32 and the winding lever 38. As shown in Figures 3 and 9, the third one-way clutch 80 is provided to transmit only a counterclockwise oscillation from the operation start position to the operation finish position of the winding lever 38 to the winding body. The third one-way clutch 80 includes a ratchet pawl 80a mounted to an upper surface of the winding lever 38 facing the winding body 32 oscillably to a standing position and a lying position, a fifth ratchet 80b formed in the lower surface of the winding body 32, and a coil spring 80d that urges the ratchet pawl 80a toward the standing position. As shown in Figure 3, the fifth ratchet 80b is formed over the entire inner periphery of the first ratchet 40 in the lower surface of the winding body 32. The third one-way clutch 80 includes a pressure plate 74 for preventing a power transmission operation in the operation start position. The pressure plate 74 is placed between the winding lever 38 and the winding body 32, made nonrotatable by the three contact members 52, and mounted to the contact members 52 vertically immovably.

The front shift operation portion 15 has a structure similar to that of the rear shift operation portion 16 related as object and mirror image, and is provided inside the rear brake lever 12.

Next, a shift operation of the rear shift operation portion 16 will be described with reference to schematic views in Figures 4 to 10.

As shown in Figure 10, an operation in the cable winding and releasing directions is operated by operating the lever member 60 of the releasing lever 36 in any of the first direction A and the second direction B. When the lever member 60 is operated in the first direction A, for example, with a thumb, the drive member 62 is also moved in the first direction A via the first one-way clutch 66. When the lever member 60 is operated in the second direction B, the drive member 62 is also moved in the second direction B via the second one-way clutch 68.

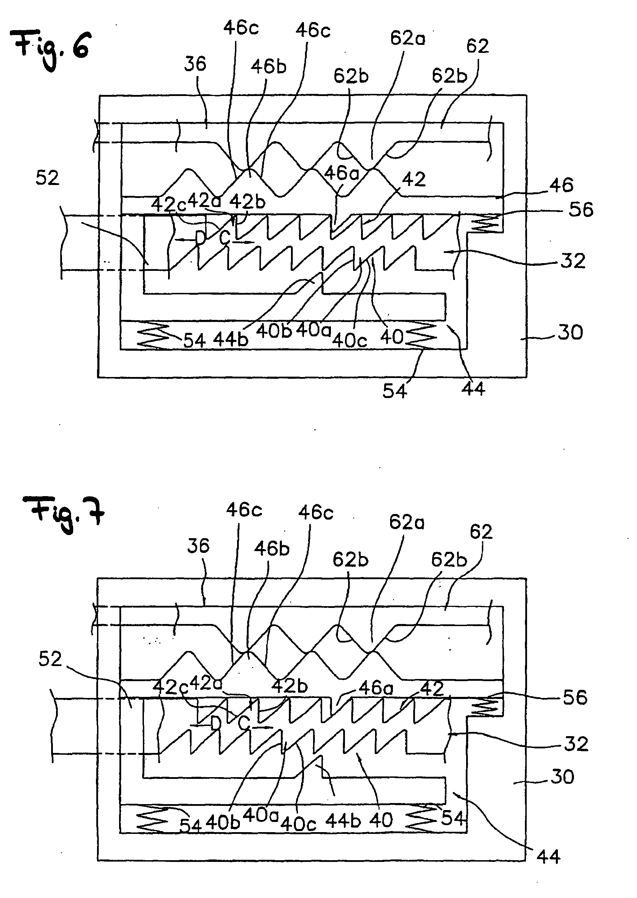

When the drive member 62 is moved in the first direction A from the state in Figure 4, the first angle protrusion 62a is moved to the right in Figure 4, and as shown in Figures 5 and 6, the first inclined surface 62b presses the second inclined surface 46c of the second angle protrusion 46b to move the releasing member 46 downward. When the releasing member 46 is moved downward, the positioning member 44 is gradually moved downward via the contact member 52, the positioning pawl 44b is removed from the first ratchet 40, and the releasing pawl 46a engages the second ratchet 42. Then, the positioning pawl 44b is completely removed from the first ratchet 40 immediately before apexes of the angle protrusions 62a and 46a come into contact with each other. Figure 6 schematically shows an instance of the positioning pawl 44b being removed from the first ratchet 40. Thus, the winding body 32 urged in the cable releasing direction D by the torsion coil spring 50 is slightly moved in the cable releasing direction D until the inclined surface 42c of the second ratchet 42 comes into contact with a rear surface of the releasing pawl 46a. This state is shown in Figure 7. Then, if a rider moves his/her hand off the releasing lever 38 after the apexes of the angle protrusions 62a and 46b come into contact with each other, an urging force of the coil spring 56 raises the releasing member 46, and an urging force of the coil spring 54 raises the positioning member 44. The winding body 32 is slightly moved in the cable releasing direction when the positioning pawl 44b is removed, and thus as shown in Figure 7, the positioning pawl 44b is placed in a position facing the next succeeding ratchet tooth 40a in the cable releasing direction D rather than the ratchet tooth 40a previously locked by the positioning pawl 44b, and can lock the succeeding ratchet tooth 40a. Then, as shown in Figure 8, when the two angle protrusions 62a and 46b return to the state of substantially coming into contact with each other, the releasing pawl 46a is removed from the second ratchet 42, and the winding body 32 is moved (rotated) by one tooth in the cable releasing direction D. If the drive member 62 is moved through two angles of the angle protrusions 62a and 46b to allow a shift operation for two shift steps to be collectively performed. Specifically, a shift operation for a plurality of shift steps can be collectively performed in response to the amount of movement of the drive member 62.

If the lever member 60 is operated with an index finger in the second direction B, the releasing member 62 is similarly lowered and raised, and the winding body 32 is moved in the cable releasing direction D through the operation as described above.

Here, the cable releasing operation can be performed when the lever member 60 of the releasing lever 36 is operated in any of the first direction and the second direction, and thus the operation direction of the cable releasing operation by the lever member 60 can be suited to rider's preference.

The operation in the cable winding direction is performed by pressing the winding lever 38 to the right in Figure 9 (counterclockwise in Figure 3) from the operation start position to the operation finish position as shown in Figure 9. When the winding lever 38 is pressed, the winding body 32 is moved in the cable winding direction, that is, to the right in Figure 4 by the third one-way clutch 80, and the first ratchet 40 presses the positioning pawl 44b downward to position the positioning pawl 44b in the next shift position in the winding direction. Also in this case, a shift operation for a plurality of shift steps can be collectively performed in response to the amount of movement of the winding lever 38.

### <Variant of the first embodiment>

(a) In the first embodiment, the operation in the cable releasing direction can be operated by any of the operations in the first direction and the second direction, but the operation in the cable winding direction may be operated by any of the operations in the first direction and the second direction. In this case, the winding direction of the shift cable 26 may be reversed in Figure 3. Then, the releasing lever 36 becomes the winding lever, and the winding lever 38 becomes the releasing lever. When the urging member is mounted to the derailleur, the urging force of the torsion coil spring 50 needs to be higher than that of the urging member.
(b) The structure in Figure 3 in the first embodiment is an example of the present invention, and the structure of the shift operation device according to the present invention is not limited to the structure in Figure 3.

### <Second embodiment>

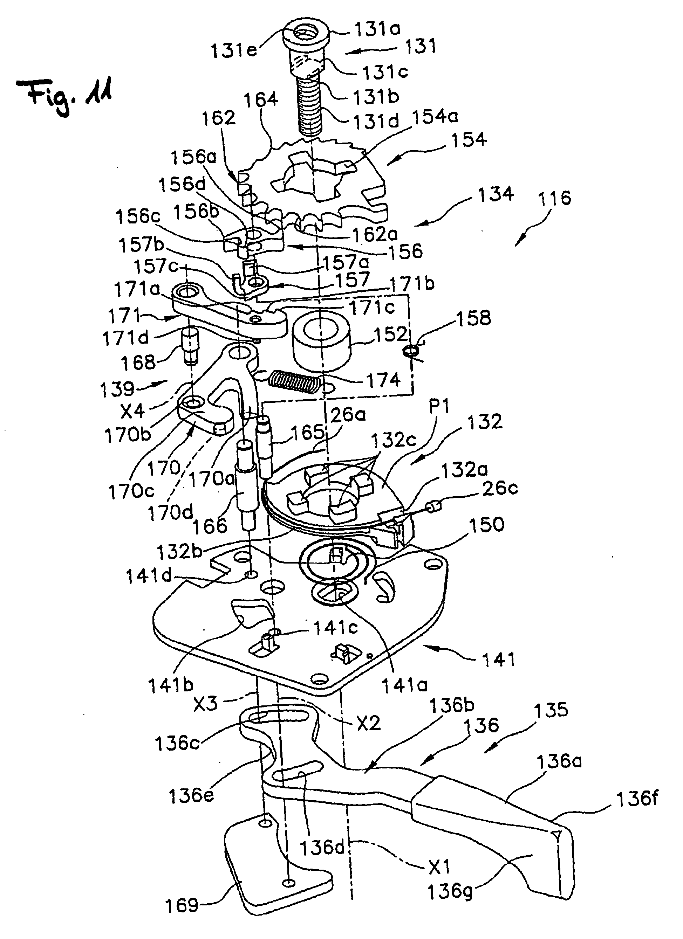

In the first embodiment, the position holding and releasing mechanism 34 is moved perpendicularly to the surface of rotation of the winding body 32, while in a second embodiment, as shown in Figure 11, a position holding and releasing mechanism 134 is moved along a surface (PI) parallel to a surface of rotation of a winding body 132 in a rear shift operation portion 116.

The rear shift operation portion 116 includes a mounting portion 130 having the same outer shape as the mounting portion 30 in Figure 2. As shown in Figure 11, the rear shift operation portion 116 includes a support shaft 131 connected to the mounting portion 130 and extending in a direction of a first axis X1, the winding body (an example of a cable lock body) 132 mounted rotatably around the first axis X1 movably in a cable pulling direction and a cable releasing direction of a shift cable 26, the position holding and releasing mechanism 134 that selectively holds the winding body 132 in any one of a plurality of holding positions corresponding to a plurality of shift positions, a releasing lever 35 for an operation in the cable releasing direction, and a winding lever 138 in Figure 2 for an operation in the cable pulling direction. In Figure 11, main portions of the rear shift operation portion 116 according to the present invention are shown in an inverted position from that shown in Figure 2.

As shown in Figures 2 and 11 to 13, the mounting portion 130 mainly includes a casing 140 (Figure 2), for example, of synthetic resin mountable to a handlebar 4 and having a space therein, and a mounting bracket 141 (Figures 11 to 13) provided in the space in the casing 40. The mounting bracket 141 is a metal plate member, and the support shaft 131 is nonrotatably connected to the mounting bracket 141. The position holding and releasing mechanism 134, the releasing lever 135, the winding lever 138, and a drive mechanism 139 are movably connected to the mounting bracket 141. Configurations thereof and detailed connecting structures to the mounting bracket 141 will be described together with descriptions of each component.

The support shaft 131 is placed in the direction of the first axis X1 that passes through a slot-shaped opening 141a of the mounting bracket 141 in Figure 11. A circular head 131a is formed in a base (an upper end in Figure 11) of the support shaft 131, and a rotation support portion 131c having chamfered portions 131b parallel to each other at a lower end is formed in the middle thereof. A male screw 131d is formed in a lower portion, and a female screw 131e is formed in the head 131a. An unshown bolt is screwed into the female screw through the casing 140 to secure the support shaft 131 to the mounting portion 130. The support shaft 131 is nonrotatably connected to the mounting bracket 141 with the chamfered portions 131b engaging the opening 141a.

The winding body 132 is, for example, a member of synthetic resin such as polyacetal, placed on a first surface (an upper surface in Figure 11) of the mounting bracket 141, and mounted to the rotation support portion 131c of the support shaft 131 via a bush 152 movably (rotatably) in a cable winding direction and the cable releasing direction. The winding body 132 includes, in an outer peripheral surface thereof, an inner lock portion 132a that locks a cable nipple 26c secured to a tip of an inner cable 26a of the rear shift cable 26, and a cable winding groove 132b for winding the inner cable 26a. The winding body 132 is urged in the cable releasing direction (clockwise in Figure 11) by a spring member 150, for example, in the form of a spiral spring. The spring member 150 has one end locked to the winding body 132 and the other end locked to the mounting bracket 141. In an upper surface of the winding body 132, for example, four engaging protrusions 132c are formed that are interlocked with and rotate a positioning unit 154 described later of the position holding and releasing mechanism 134. One of the four engaging protrusions 132c has a circumferential length different from the lengths of the others. This allows rotation phases of the positioning unit 154 and the winding body 132 to be reliably matched.

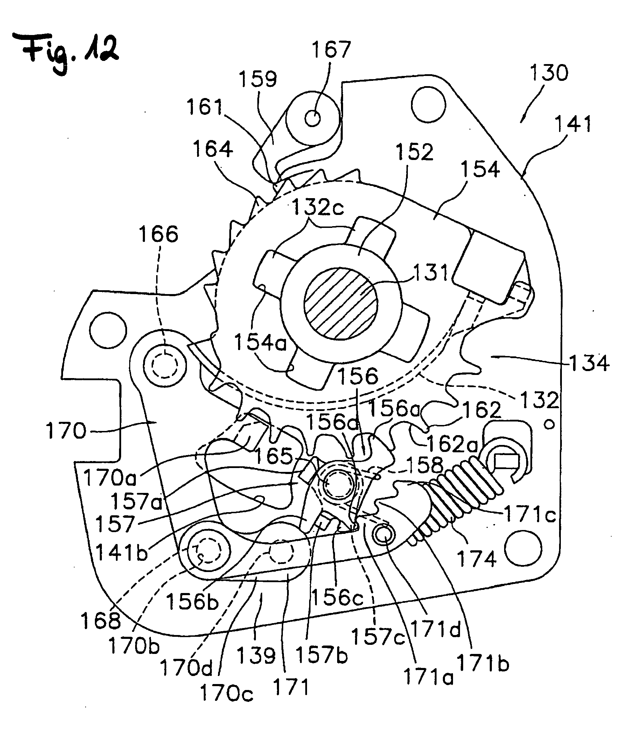

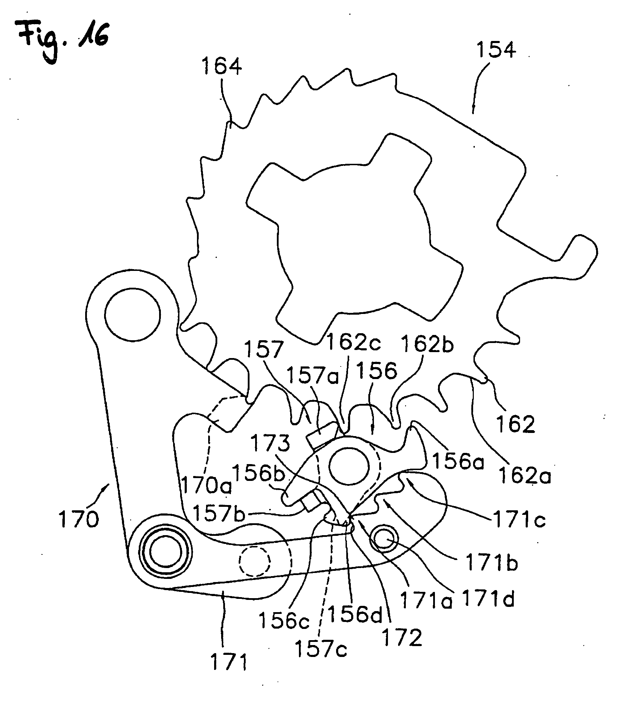

The position holding and releasing mechanism 134 is placed on the side of the first surface of the mounting bracket 141. The position holding and releasing mechanism 134 includes the positioning unit 154 that has, for example, nine positioning teeth 162 and eight advance teeth 164 and is interlocked with the winding body 132, and a positioning pawl 156 that oscillates between a first engaging position in Figure 12 for engagement with the positioning teeth 162 and a first releasing position in Figure 16 for release from the positioning teeth 162. The position holding and releasing mechanism 134 includes a rotation preventing pawl 157 that oscillates between a second engaging position in Figure 16 for engagement with the positioning teeth 162 in a position different from the positioning pawl 156 and a second releasing position in Figure 12 for release from the positioning teeth 162, and an advance pawl 159 that engages and is separated from the advance teeth 164.

The positioning unit 154 is placed in contact with the upper surface of the winding body 132 in Figure 11. The positioning unit 154 has an engaging hole 154a that engages the engaging protrusion 132c of the winding body 132, and is integrally rotated with the winding body 132. The positioning teeth 162 and the advance teeth 164 are provided of the numbers corresponding to the number of shift positions of a rear derailleur 18, and formed in an outer peripheral surface of the positioning unit 154 so as to radially protrude. The positioning unit 154 is urged in the cable releasing direction (clockwise in Figure 11) together with the winding body 132 by the spring member 150. The positioning teeth 162 and the advance teeth 164 are spaced based on the amount of movement of the cable set according to the shift positions of the rear derailleur 18.

The positioning pawl 156 is oscillably mounted to a second oscillation shaft 165 provided to pass through the mounting bracket 141 and placed along a second axis X2 parallel to the first axis X1. The second oscillation shaft 165 passes through the mounting bracket 141 and extends downward. The positioning pawl 156 is urged counterclockwise in Figure 11 so as to be placed in the first engaging position by a spring member (an example of a second urging member) 158, for example, in the form of a torsion coil spring. The positioning pawl 156 includes a first pawl portion 156a that comes into contact with a lock surface 162a of the positioning teeth 162 and prevents the positioning unit 154 urged clockwise from being rotated in the cable releasing direction, a pair of regulating protrusions 156b and 156c for regulating an oscillation range of the rotation preventing pawl 157, and an engaging protrusion 156d that engages the drive mechanism 139. The first pawl portion 156a is formed to protrude toward the positioning unit 154 in a tip extending from the center of rotation along the positioning unit 154. The pair of regulating protrusions 156b and 156c extend on the opposite side of the first pawl portion 156a with a space therebetween. The regulating protrusion 156b is formed in a position such that the rotation preventing pawl 157 is placed in the second releasing position when the positioning pawl 156 is placed in the first engaging position. The regulating protrusion 156c is provided so that the rotation preventing pawl 157 can release the engagement between a second arm member 171 of the drive mechanism 139 described later and the positioning pawl 156 by the oscillation within a predetermined range. The engaging protrusion 156d slightly protrudes toward the second arm member 171 so as to be engageable with three operation portions 171a to 171c of the second arm member 171.

The rotation preventing pawl 157 is rotatably mounted to the second oscillation shaft 165 below the positioning pawl 156, and oscillable within the predetermined range (for example, within a range of 5 to 10 degrees) relative to the positioning pawl 156. In order to achieve this, the rotation preventing pawl 157 has a second pawl portion 157a that is bent upward from below the positioning pawl 156 in Figure 11 and engages the positioning teeth 162, a regulating portion 157b bent upward so as to be placed between the pair of regulating protrusions 156b and 156c, and a release cam portion 157c that can abut against the three operation portions 171a to 171c of the second arm member 171. The regulating portion 157b is formed to come into contact with the regulating protrusion 156b when the positioning pawl 156 is moved from the first releasing position in Figure 16 to the first engaging position in Figure 12 to allow the rotation preventing pawl 157 to be moved from the second engaging position to the second releasing position. The release cam portion 157c is formed to be moved from the second releasing position to the second engaging position together with the positioning pawl 156 when the positioning pawl 156 is moved from the first engaging position to the first releasing position by the drive mechanism 39. The release cam portion 157c is provided, when in the second engaging position, to release the engagement between the positioning pawl 156 and the drive mechanism 139 when the positioning teeth 162 comes into contact with the second pawl portion 157a to cause the rotation preventing pawl 157 to be rotated within the predetermined range. As shown in Figure 16, the release cam portion 157c overlaps the regulating protrusion 156c and is hidden when the regulating portion 157b comes into contact with the regulating protrusion 156b.

As shown in Figure 16, when moved to the second engaging position, the rotation preventing pawl 157 comes into contact with a positioning tooth 162c upstream in the cable releasing direction by one of a positioning tooth 162b with which the positioning pawl 156 has been in contact, and prevents the positioning unit 154 from being continuously rotated in the cable releasing direction at a stroke after the positioning pawl 156 is separated. When the rotation preventing pawl 157 is placed in the second engaging position, the positioning pawl 156 is placed in a position passing over the positioning tooth 162b that the positioning pawl 156 has engaged as shown in Figure 12.

The advance pawl 159 is oscillably mounted to an oscillation shaft 167 standing on the winding lever 138. The advance pawl 159 is urged counterclockwise in Figure 12 by a spring member (not shown) such as a torsion coil spring so that the advance pawl 159 is placed in an advance position. The advance pawl 159 is placed in a position spaced apart from the advance teeth 164 by a holding plate 161 provided in the mounting bracket 141 when the winding lever 138 is placed in an operation start position. Then, when the winding lever 138 is operated, the advance pawl 159 engages the advance teeth 164 from an end of the holding plate 161 to rotate the positioning unit 154 in the cable pulling direction (counterclockwise in Figure 12).

The releasing lever 135 includes the lever member (an example of an input member) 136 for the cable releasing operation, and the drive mechanism (an example of a drive member) 139 for causing the position holding and releasing mechanism 34 to perform the releasing operation for the plurality of shift steps with one operation of the lever member 136.

The lever member 136 is placed in a second surface (a lower surface in Figure 11) of the mounting bracket 141. The lever member 136 can cause the position holding and releasing mechanism 134 to perform the releasing operation via the drive mechanism 139 according to any of operations in a first direction, clockwise and a second direction, counterclockwise in Figure 11.

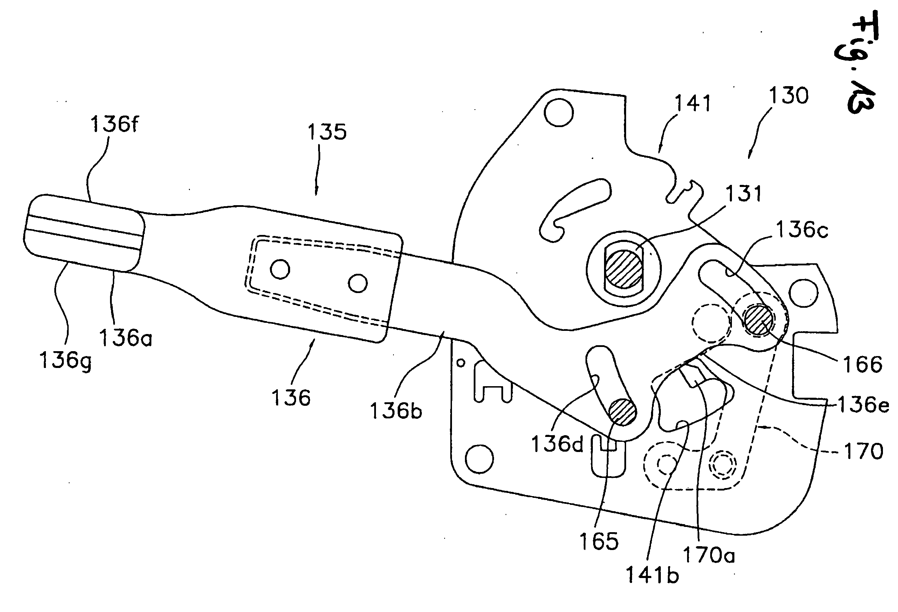

The lever member 136 oscillates from a neutral position in Figure 13 in the second direction (clockwise in Figure 13) around the second oscillation shaft 165 protruding on the side of the second surface of the mounting bracket 141. The lever member 136 also oscillates in the first direction (counterclockwise in Figure 13) around the first oscillation shaft 166 that is spaced apart from the second oscillation shaft 165 and on which a first arm member 170 of the drive mechanism 139 is oscillably supported. The first oscillation shaft 166 is placed along a third axis X3 parallel to the first axis X1. The lever member 136 is urged toward the support shaft 131 via the drive mechanism 139. The lever member 136 is urged so that the first and second oscillation shafts 166 and 165 are placed in one ends (lower ends in Figure 13) of first and second slots 136c and 136d described later. In this embodiment, the lever member 136 is urged toward the support shaft 131.

The lever member 136 has an operation knob 136a, and a lever portion 136b connected to the knob 136a. The knob 136a is made of, for example, synthetic resin or die cast metal, and has, on opposite sides thereof, first and second operation surfaces 136f and 136g for operations in the first and second directions so as to facilitate the operations in the first and second directions. The lever portion 136b is made of, for example, metal such as stainless steel alloys or steel, and slightly bent in the middle so as to be placed around the support shaft 131.

The first and second slots 136c and 136d having arcuate shapes and semicircular opposite ends are formed in a base and a tip side thereof of the lever portion 136b. The first slot 136c is formed by an arc around a semicircle at one end (a lower end in Figure 13) of the second slot 136d, and the second slot 136d is formed by an arc around a semicircle at one end (a lower end in Figure 13) of the first slot 136c. Between the first and second slots 136c and 136d, an acting portion 136e for operating the drive mechanism 139 is formed in one edge (a lower side in Figure 13) of the lever portion 136b. The acting portion 136e is always in contact with the first arm member 170 of the drive mechanism 139 that urges the lever member 136 toward the support shaft 131. The first slot 136c engages the first oscillation shaft 166, and the second slot 136d engages the second oscillation shaft 165. Thus, widths of the slots 136c and 136d are slightly larger than diameters of the oscillation shafts 166 and 165. The oscillation shafts 165 and 166 pass through through holes 141c and 141d formed in the mounting bracket 141 and extend downward, and have lower ends secured by a support plate 169 spaced apart from the first surface of the mounting portion bracket 141.

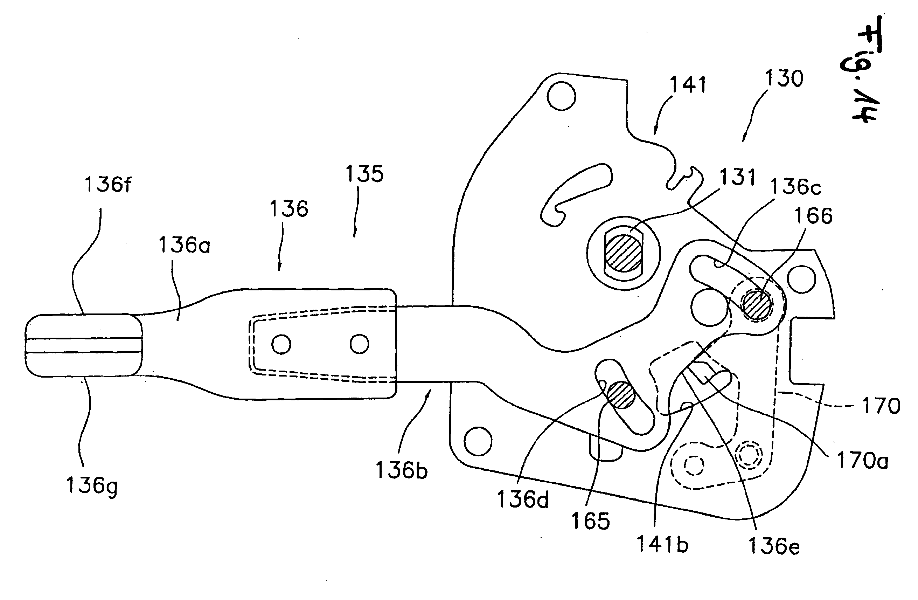

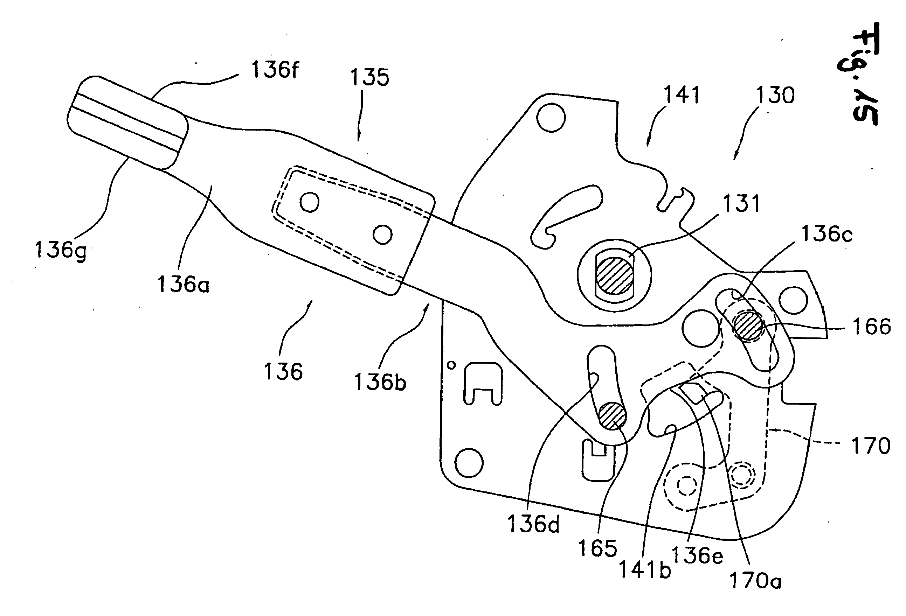

As shown in Figure 13, the lever member 136 urged toward the support shaft 131 oscillates from the neutral position in which one ends (the lower ends in Figure 13) of the slots 136c and 136d come into contact with the oscillation shafts 166 and 165 in any of the first direction in Figure 14 and the second direction in Figure 15. At this time, when the lever member 136 is moved in the first direction, the first oscillation shaft 166 is the center of oscillation, and when the lever member 136 is moved in the second direction, the second oscillation shaft 165 is the center of oscillation as described above. In any of the movements, the acting portion 136e operates in the same manner, and causes the drive mechanism 139 to perform the same operation. Thus, the lever member 136 can perform the same multistage releasing operation by the operations from the neutral position in both the first and second directions.

Though not shown in Figure 11, the winding lever 138 is placed above the positioning unit 154 in Figure 11, and oscillably mounted to the support shaft 131 from the operation start position in an operation finish direction. As described above, the advance pawl 159 is oscillably placed in the middle of the winding lever 138. The winding lever 138 is urged toward the operation start position by an unshown spring member.

As shown in Figures 11 and 12, the drive mechanism 139 is movably connected to the first surface of the mounting bracket 141 in the position spaced apart from the support shaft 131. Specifically, the drive member, that is, the drive mechanism 139 includes the first arm member 170 oscillably mounted to the first oscillation shaft 166, and the second arm member 171 oscillably mounted to the first arm member 170. The first arm member 170 includes a lock portion 170a that branches on the way to the second arm member 171, a connecting portion 170b that oscillably connects the second arm member 171, and a support portion 170c for preventing rattling during the oscillation of the first and second arm members 170 and 171. The lock portion 170a branches on the way, passes through the opening 141b formed in the mounting bracket 141, and extends on the side of the second surface. The acting portion 136e of the lever member 136 comes into contact with a tip of the lock portion 170a. The first arm member 170 is interlocked with the acting portion 136e moved by the operation of the lever member 136 and oscillates. The first arm member 170 is urged counterclockwise in Figure 12 by a spring member 174 locked to the second arm member 171. The urging force is transmitted to the lever member 136 via the acting portion 136e to urge the lever member 136 toward the support shaft 131. A third oscillation shaft 168 stands on the connecting portion 170b. The support portion 170c extends to overlap an oscillation range of the second arm member 171, and comes into contact with the second arm member 171 to prevent rattling of the second arm member 171. A contact protrusion 170d that comes into contact with the first surface of the mounting bracket 141 is formed in a lower surface of the support portion 170c. This also reduces rattling of the first arm member 170 during the oscillation.

The second arm member 171 has the plurality of (for example, three) operation portions 171a to 171c at a tip thereof. The three operation portions 171a to 171c allow the drive mechanism 139 to perform three multistage releasing operations at the maximum with one operation of the lever member 136 in the first direction or the second direction, that is, continuous shifting for three shift steps. For example, the movement of the inner cable 26a in the cable releasing direction causes the rear derailleur 18 to perform shifting up, and when the current shift step is the ninth step, the gear can be shifted to the sixth step at a stroke.

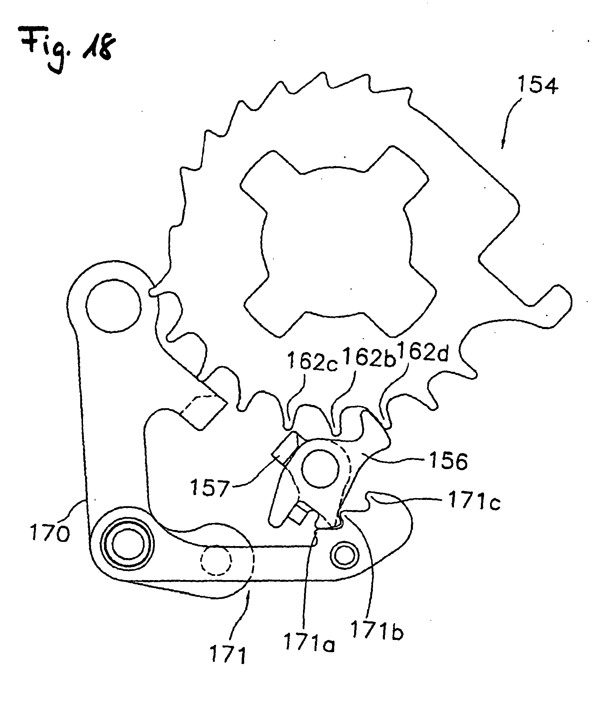

As shown in Figure 18, each of the operation portions 171a to 171c includes an engaging portion 172 that engages the engaging protrusion 156d of the positioning pawl 156, and an engagement releasing portion 173 that comes into contact with the release cam portion 157c to release the engagement with the positioning pawl 156 at the engaging portion 172 by the oscillation of the rotation preventing pawl 157 within the predetermined range. The engagement releasing portion 173 is provided axially adjacent to the engaging portion 172. The second arm member 171 is urged in a direction approaching the positioning pawl 156 by a spring member (an example of a third urging member) 174, for example, in the form of a coil spring. As described above, the first arm member 170 is also urged in a direction approaching the positioning unit 154 by the spring member 174, and further, the lever member 136 is urged in a direction approaching the support shaft 131. The spring member 174 is locked to a lock pin 171d having one end protruding toward the mounting bracket 41 near the operation portion 171a of the second arm member 171 and the other end locked to the mounting bracket 141. Thus, the spring member 174 collectively urges the three members 171, 170, and 136.

The front shift operation portion and the rear shift operation portion 116 are related as object and mirror image and have substantially the same structure as in the first embodiment except the number of shift steps, and the front shift operation portion is provided inside the rear brake lever 12.

Next, a shift operation of the rear shift operation portion 116 will be described.

An operation in the cable releasing direction is as described below.

When the lever member 136 is operated in the first direction from the neutral position in Figure 13, the lever member 136 oscillates around the first oscillation shaft 166 as shown in Figure 14. When the lever member 136 oscillates around the first oscillation shaft 166, the oscillation causes the acting portion 136e to be moved in a direction apart from the support shaft 131 against an urging force of the spring member 174, and causes the first arm member 170 that comes into contact with the acting portion 136e to oscillate in a direction apart from the positioning unit 154.

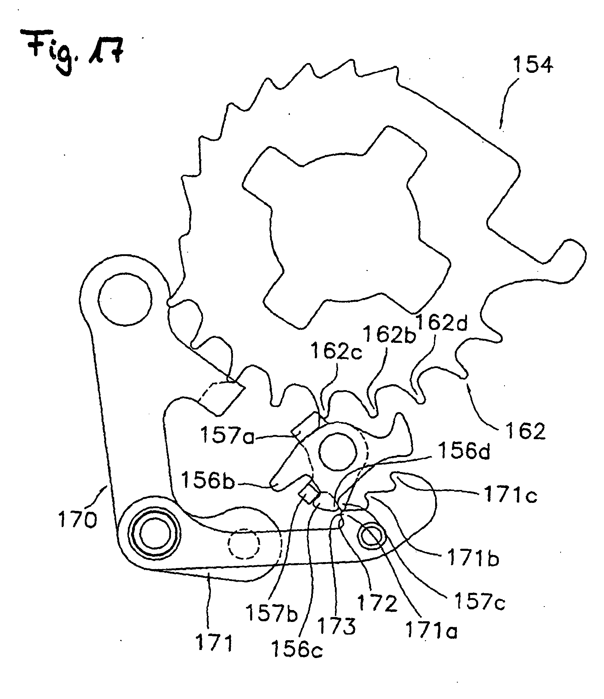

When the lever member 136 is operated in the second direction from the neutral position in Figure 13, the lever member 136 oscillates around the second oscillation shaft 165 as shown in Figure 17. When the lever member 136 oscillates around the second oscillation shaft 165, the oscillation causes the acting portion 136e to be moved in the direction apart from the support shaft 131 against the urging force of the spring member 174 like the operation in the first direction, and the first arm member 170 that comes into contact with the acting portion 136e oscillates in the direction apart from the positioning unit 154.

When the first arm member 170 oscillates in the direction apart from the positioning unit 154, the engaging portion 172 of the operation portion 171a of the second arm member 171 engages the engaging protrusion 156d of the positioning pawl 156 to cause the positioning pawl 156 to oscillate clockwise around the second oscillation shaft 165 from the first engaging position in Figure 12 to the first releasing position in Figure 16. At this time, the operation portion 171a also comes into contact with the release cam portion 157c of the rotation preventing pawl 157 to cause the rotation preventing pawl 157 to oscillate from the second releasing position in Figure 12 to the second engaging position in Figure 16. Thus, the positioning unit 154 urged in the cable releasing direction clockwise in Figure 16 by the spring member 150 via the winding body 132 is rotated in the cable releasing direction, and the positioning tooth 162c downstream in the rotational direction by one of the positioning tooth 162b positioned by the positioning pawl 156 comes into contact with the second pawl portion 157a of the rotation preventing pawl 157. Then, the rotation preventing pawl 157 is oscillable relative to the positioning pawl 156 within the predetermined range, and thus the rotation preventing pawl 157 pressed by the positioning tooth 162c oscillates counterclockwise. Then, as shown in Figure 17, the release cam portion 157c of the rotation preventing pawl 157 presses the engagement releasing portion 173 of the operation portion 171 a to release the engagement with the positioning pawl 156 at the engaging portion 172 in the second arm member 171. Thus, the positioning pawl 156 urged by the spring member 158 is moved from the first releasing position to the first engaging position, and engages the positioning tooth 162d on the cable releasing side by one step to finish the releasing operation for one shift step. This state is shown in Figure 18. In Figure 18, the positioning unit 154 is rotated in the cable releasing direction by one shift step as compared with that in Figure 12.

When the lever member 136 is further caused to oscillate in this state, as shown in Figures 19 and 20, the operation portion 171b causes the positioning pawl 156 to oscillate to the first releasing position to rotate the positioning unit 154 in the cable releasing direction like the operation described above, and the positioning tooth 162b further presses the rotation preventing pawl 157 to cause the rotation preventing pawl 157 to oscillate within the predetermined range to release the engagement between the operation portion 171b and the positioning pawl 156. Thus, as shown in Figure 21, the positioning unit 154 is further rotated in the cable releasing direction by one shift step until the positioning pawl 156 comes into contact with a positioning tooth 162e.

When the lever member 136 is further operated, the positioning unit 154 is further rotated in the cable releasing direction by one shift step with the same operation. The releasing operation can be repeated until the engagement of the engagement releasing portion 173 of the operation portion 171c is released.

When the hand is released from the lever member 136 to finish the releasing operation, the second arm member 171 urged by the spring member 174 returns to the position in Figure 12. At this time, the second arm member 171 returns to the position in Figure 12 while being in contact with the outer periphery of the regulating protrusion 156c of the positioning pawl 156, but the second arm member 171 does not act on the positioning pawl 156. The release cam portion 157c of the rotation preventing pawl 157 is formed to be hidden by the regulating protrusion 156c in this state, and thus the second arm member 171 does not act on the rotation preventing pawl 157. This prevents the cable releasing operation.

The operation in the cable winding direction is as described below.

When the winding lever 138 is operated from the operation start position toward the operation finish position, the advance pawl 159 presses the advance teeth 164 to rotate the positioning unit 154 in the cable winding direction (counterclockwise in Figure 12). Then, the positioning teeth 162 come into contact with the positioning pawl 156 to press the positioning pawl 156 toward the first releasing position. When the pressed positioning teeth 162 pass through the positioning pawl 156, however, the positioning teeth 156 return to the first engaging position. When the winding lever 138 is operated to the operation finish position, multistage winding operations, for example, of four steps can be performed.

Here, the plurality of operation portions 171a to 171c placed in a line in the second arm member 171 of the drive mechanism (drive member) 139 spaced apart from the support shaft 131 engage the positioning pawl 156 to cause the positioning pawl 156 to oscillate to the first releasing position, the movement of the rotation preventing pawl 157 within the predetermined range releases the engagement between the second arm member 171 and the positioning pawl 156 to cause the positioning pawl 156 to oscillate to the first engaging position, and thus no structure for multistage releasing is placed on the support shaft 131 on which the positioning unit 154 and the winding body 132 are placed. This prevents the increase in the axial length of the support shaft 31, and allows the multistage releasing without increasing the thickness of the rear shift operation portion 116.

### <Variant of the second embodiment>

In the second embodiment, the spring member 174 urges the lever member 136, the first arm member 170, and the second arm member 171, but each member may be urged by each spring member.

### <Third embodiment>

In the second embodiment, the input member that oscillates with the two oscillation shafts 165 and 166 in the plane parallel to the first plane (P) is exemplified, but a joystick-shaped input member may be used.

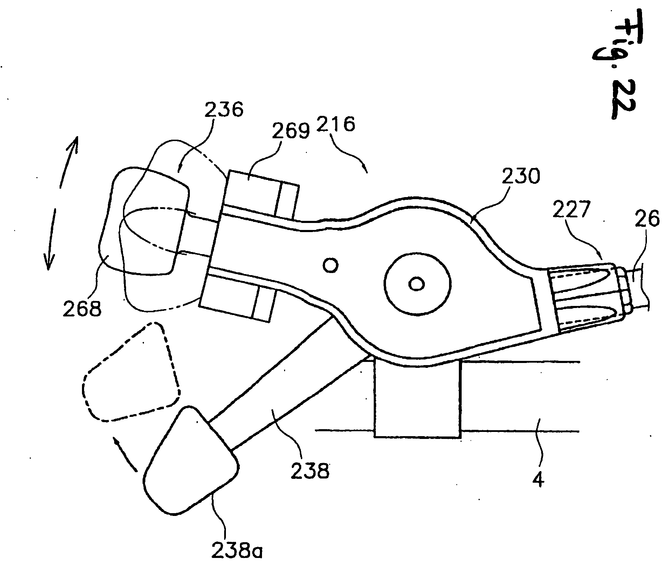

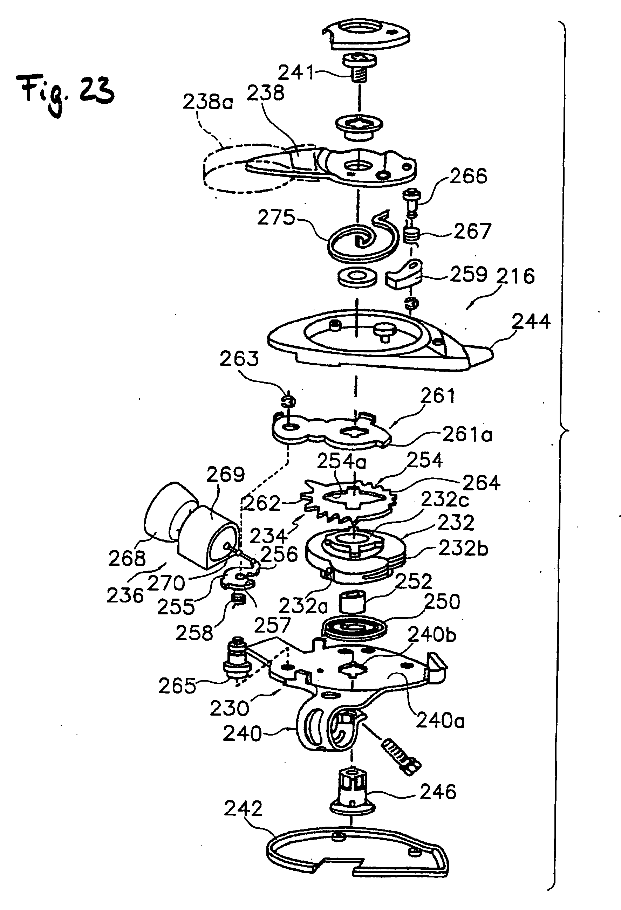

As shown in Figures 22 to 26, a mounting portion 230 includes a bracket 240, for example, made of a metal plate mountable to a handlebar 4 by a fastening bolt, a first cover 242 mounted to one side of the bracket 240, and a second cover 244 mounted to the other side of the bracket 240. The bracket 240 has a plane 240a on which a winding body 232 is placed, and an opening 240b in which a rotation shaft 246 is nonrotatably mounted. The rotation shaft 246 passes through the opening 240b of the bracket 240 and extends upward. A tip of the rotation shaft 246 is secured by a securing bolt 241 to secure the second operating member 238. The bracket 240 has a female screw 240c into which an outer lock portion 227 for locking an outer casing 26b (Figure 23) of a rear shift cable 26 is screwed.

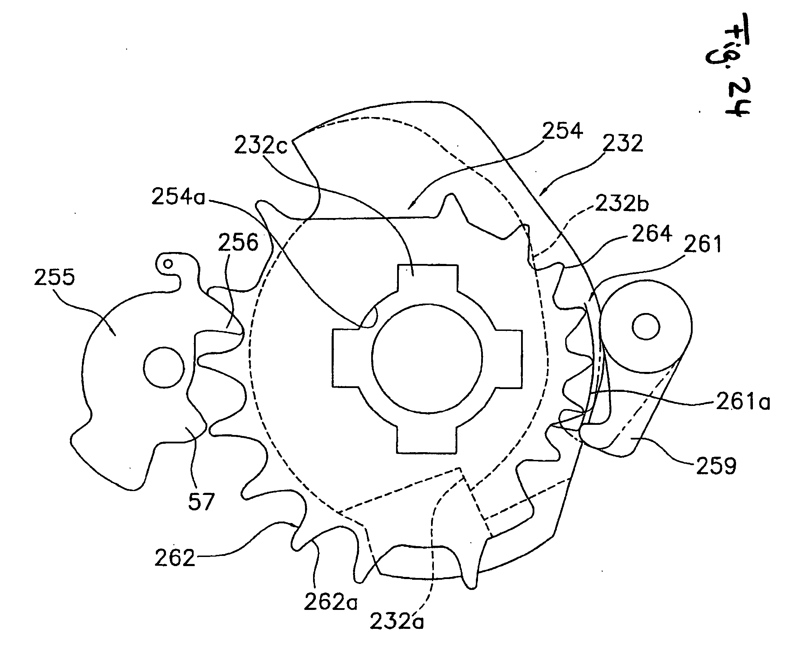

The winding body 232 is movable along a first plane (P) parallel to the plane 240a of the bracket 240. Specifically, the winding body 232 is mounted to the rotation shaft 246 via a bush 252 movably (rotatably) in a cable winding direction and a cable releasing direction. The winding body 232 includes, in an outer peripheral surface thereof, an inner lock portion 232a that locks a cable nipple 26c secured to a tip of an inner cable 26a (Figure 1) of the rear shift cable 26, and a cable winding groove 232b for winding the inner cable 26a. The winding body 232 is urged in the cable releasing direction (couterclockwise in Figure 24) by a spring member 250 such as a torsion coil spring. The spring member 250 has one end locked to the winding body 232 and the other end locked to the bracket 240 described later. In an upper surface of the winding body 232, an engaging protrusion 232c is formed that is interlocked with and rotate a positioning unit 254 described later of the position holding and releasing mechanism 234.

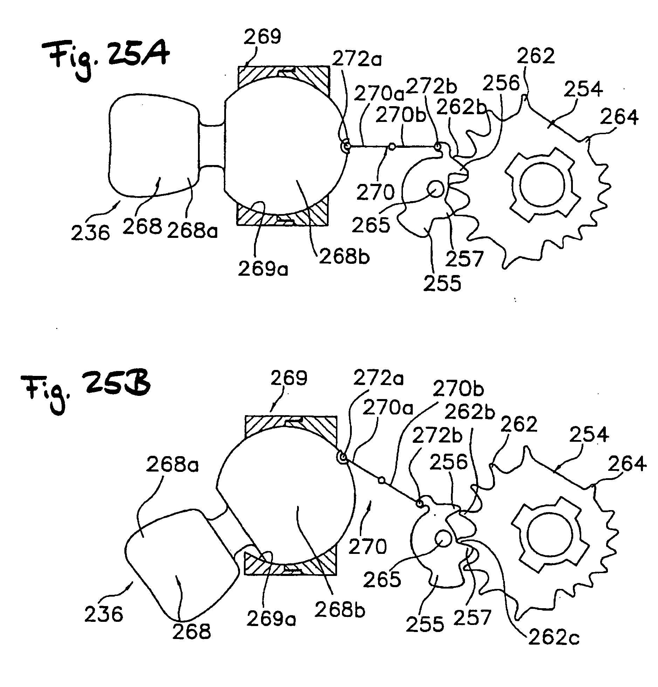

The position holding and releasing mechanism 234 includes the positioning unit 254 that has, for example, eight positioning teeth 262 and eight advance teeth 264 and is interlocked with the winding body 232, and a positioning pawl 256 that is moved along a surface parallel to the first plane (P) between an engaging position in Figure 25A for engagement with the positioning teeth 262 and a releasing position in Figure 25B for release from the positioning teeth 262. The position holding and releasing mechanism 234 includes a rotation preventing pawl 257 that is moved along a surface parallel to the first plane (P) between a contacting position in Figure 25B for engagement with the positioning teeth 262 in a position different from the positioning pawl 256 and a separating position in Figure 25A for separation from the positioning teeth 262, an advance pawl 259 that is moved between an advance position for engagement with the advance teeth 64 shown by a dash-double-dot line in Figure 24 and a releasing position for separation shown by a solid line in Figure 24, and a holding plate 261 nonrotatably mounted to the rotation shaft 246.

The positioning unit 254 has an engaging hole 254a that engages the engaging protrusion 232c of the winding body 32, and is integrally moved with the winding body 232. The positioning teeth 262 and the advance teeth 264 are provided of the numbers corresponding to the number of shift positions of a rear derailleur 18, and formed in an outer peripheral surface of the positioning unit 254 so as to radially protrude. The positioning unit 254 is urged in the cable releasing direction (couterclockwise in Figure 24) together with the winding body 232 by the spring member 250. The positioning teeth 262 and the advance teeth 264 are spaced based on the amount of movement of the cable set according to the shift positions of the rear derailleur 18.

The positioning pawl 256 and the rotation preventing pawl 257 are integrally formed in an oscillation unit 255 oscillably mounted to an oscillation shaft 265 standing on the bracket 240. The oscillation unit 255 is urged clockwise in Figure 24 by a spring member 258 such as a torsion coil spring so that the positioning pawl 256 is placed in the engaging position. The positioning pawl 256 comes into contact with a lock surface 262a of the positioning teeth 262 and prevents the positioning unit 256 urged counterclockwise from being rotated in the cable releasing direction. As shown in Figure 25B, when moved to the contacting position, the rotation preventing pawl 257 comes into contact with a positioning tooth 262c downstream in the cable releasing direction by one of a positioning tooth 262b with which the positioning pawl 256 has been in contact, and prevents the positioning unit 254 from being continuously rotated in the cable releasing direction at a stroke after the positioning pawl 256 is separated. When the rotation preventing pawl 257 is placed in the contacting position, the positioning pawl 256 is placed in a position passing over the positioning tooth 262b that the positioning pawl 256 has engaged as shown in Figure 25B.

The advance pawl 259 is oscillably mounted to an oscillation shaft 266 standing on the second operating member 238. The advance pawl 259 is urged clockwise in Figure 24 by a spring member 267 such as a torsion coil spring so that the advance pawl 259 is placed in the advance position.

The holding plate 261 is nonrotatably mounted to the rotation shaft 246 and secured to an upper end of the oscillation shaft 265 by a snap ring 263. The holding plate 261 has an abutting portion 261a for placing the advance pawl 259 in the releasing position when the second operating member 238 is placed in an operation start position described later so as to protrude toward the advance pawl 259. Thus, the advance pawl 259 is always placed in the releasing position when the second operating member 238 is placed in the operation start position. Then, when the second operating member 238 is operated from the operation start position to an operation finish position and a tip of the advance pawl 259 exceeds the abutting portion 261a, the advance pawl 259 is urged by a spring member 267 and oscillates toward the advance position.

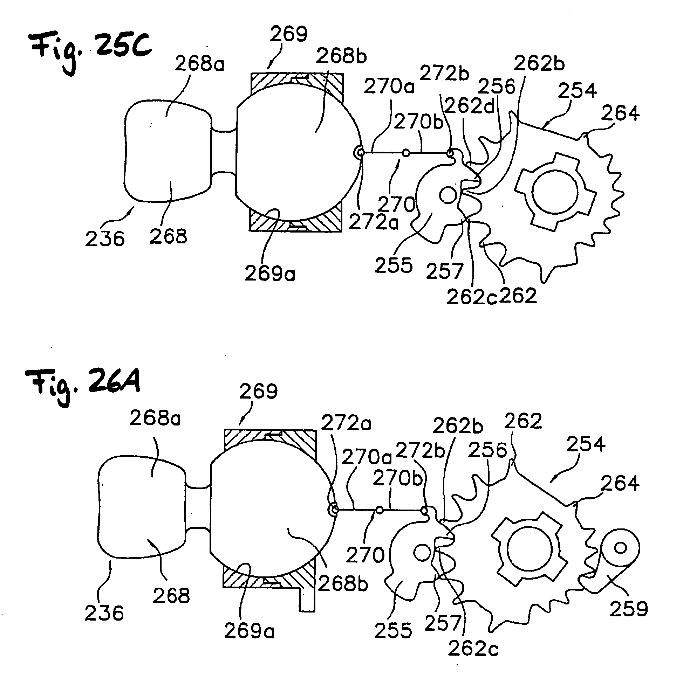

As shown in Figure 23, a first operating member 236 includes an input member 268 movable (oscillable) in any directions including a first direction and a second direction shown by dash-double-dot lines in Figure 22, and a drive member 270 that is moved by the input member 268 to move the positioning pawl 256 from the engaging position to the releasing position. As shown in Figure 25, the input member 268 is a joystick-shaped member, and has a knob 268a and a spherical portion 268b formed in a base of the knob 268a. An outer peripheral surface of the spherical portion 268b is formed by a spherically curved surface. A periphery of the spherical portion 268b is covered with a case member 269 secured to the bracket 240. A spherical guide surface 269a that tiltably guides the spherical portion 268b is formed inside the case member 269. The input member 268 is urged toward the neutral position in Figure 25A by the spring member 258 that urges the oscillation unit 255, and can oscillate in all directions including the first direction and the second direction from the neutral position around the center of the peripheral portion 268b.

As shown in Figure 25, the drive member 270 includes a first link member 270a (an example of a connecting member) connected to the outer periphery of the spherical portion 268b of the input member 268 by a universal joint 272a, and a second link member 270b (an example of a connecting member) rotatably connected to the first link member 270a. The second link member 270b is connected to the oscillation unit 255 via a universal joint 272b.

For the first operating member 236 with such a configuration, the knob 268a of the input member 268 is tilted in one direction by hand to cause the spherical portion 268b to oscillate around a base of the guide surface 269a. When the spherical portion 268b oscillates, the drive member 270 connected to the center thereof is pulled to cause the oscillation unit 255 to oscillate counterclockwise in Figure 24, and move the positioning pawl 256 from the engaging position to the releasing position. When the operation is stopped and the hand is released, the input member 268 is returned to the neutral position by the spring member 271. At this time, the oscillation unit 55 is urged so that the positioning pawl 256 is placed in the engaging position by the spring member 58, and thus the oscillation unit 255 oscillates clockwise to again place the positioning pawl 256 in the engaging position.

As shown in Figures 22 and 23, the second operating member 238 is mounted to the rotation shaft 246 oscillably to the operation start position shown by a solid line in Figure 22 and the operation finish position shown by a dash-single-dot line. The second operating member 238 is urged toward the operation start position by a spring member 275 such as a spiral spring. A knob 238a is provided in one end of the second operating member 238. The oscillation shaft 266 that supports the advance pawl 259 stands on the side of the other end of the second operating member 238 with the center of oscillation therebetween.

The front shift operation portion 215 and the rear shift operation portion 216 are related as object and mirror image and have the same structure as in the first embodiment, and the front shift operation portion 215 is provided inside the rear brake lever 212.

Next, a shift operation of the rear shift operation portion 216 will be described.

An operation in the cable releasing direction is as described below.

As shown in Figures 25A to 25C, when the knob 268a of the input member 268 of the first operating member 236 is operated, the spherical portion 268b is rotated around the center of the guide surface 269a. When the spherical portion 268b is rotated, the drive member 270 connected to the center thereof is pulled, the oscillation unit 255 oscillates counterclockwise in Figure 25A from a state where the positioning pawl 256 is placed in the engagement position in Figure 25A, and the positioning pawl 256 is moved from the engaging position to the releasing position in Figure 25B and separated from the positioning unit 254. Thus, the positioning unit 254 is urged in the cable releasing direction by the spring member 250, and thus the positioning unit 254 is rotated in the cable releasing direction. When the positioning pawl is moved to the releasing position, however, the rotation preventing pawl 257 integrally formed with the positioning pawl 256 in the oscillation unit 255 is moved to the contacting position. Thus, the positioning unit 254 is stopped in a position where the positioning pawl 256 passes over the positioning tooth 262b that the positioning pawl 256 has engaged. In this state, when the operation is stopped and the hand is released from the knob 268a, the input unit 268 is returned to the neutral position by the spring member 258. At this time, the oscillation unit 255 is urged so that the positioning pawl 256 is placed in the engaging position by the spring member 258, and thus the oscillation unit 255 oscillates clockwise as shown in Figure 25C to again place the positioning pawl 256 in the engaging position. Thus, the positioning unit 254 is rotated in the cable releasing direction by one tooth of the positioning teeth 262 and stopped, and the winding body 232 is also rotated in the cable releasing direction by one shift position.

Here, the winding body 232 can be moved in the cable releasing direction by the movement of the first operating member 236 in any of the first direction and the second direction, and thus the operating direction of the first operating member 236 can be suited to rider's preference. Also, the winding body 232 and the positioning pawl 256 are placed in parallel, which can make the shift operation portion 216 compact.

The operation in the cable winding direction is as described below.

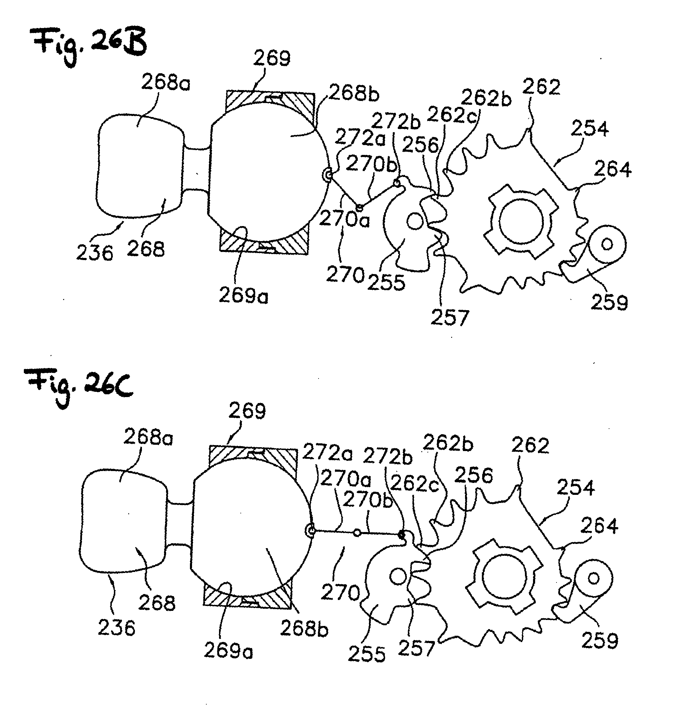

When the second operating member 238 is operated from the operation start position toward the operation finish position, the advance pawl 259 is urged by the spring member 267 and moved to the advance position to engage the advance teeth 264 as shown in Figure 26A at the time of the tip of the advance pawl 259 passing through the abutting portion 261a. Thus, the oscillation of the second operating member 238 causes the positioning unit 254 to be rotated in the cable winding direction (clockwise in Figure 26). The positioning pawl 256 is placed in the engaging position until the positioning unit 254 is rotated, and is pressed by the positioning tooth 262c next to the positioning tooth 262b positioned and moved toward the releasing position according to the oscillation of the second operating member 238 as shown in Figure 26B. At this time, the first and second link members 270a and 270b of the drive member 270 are bent at connecting portions and sag to prevent the input member 268 from being moved. When the second operating member 238 is further caused to oscillate toward the operation finish position, the positioning tooth 262c passes over the positioning pawl 256, and the positioning pawl 256 is moved to the engaging position with the positioning tooth 262c as shown in Figure 26C. Thus, the positioning unit 254 is rotated in the cable winding direction by one tooth of the positioning teeth 262 and stopped, and the winding body 232 is also rotated in the cable winding direction by one shift position. When the second operating member 238 is further caused to oscillate toward the operation finish position from the state in Figure 26C, the same operations as in Figures 26A to 26C are repeated, and the winding body can be further rotated in the cable winding direction by one tooth.

### <Variant of the third embodiment>

In the third embodiment in which the input member and the drive member are separated, the drive member 270 has the two link members 27a and 270b, but may have a tensionable and releasable member such as a wire or a rope instead of the link member.

### <Variants relating to all embodiments>

(c) In the three embodiments, the shift operation device of the external shift device including the front derailleur and the rear derailleur is exemplified, but the present invention may be applied to a shift operation device of an internal shift device having an internal shift hub.
(d) In the three embodiments, the mounting portion of the rear shift operation portion 16 is separated from the rear brake lever 12, but may be integrally secured to the bracket of the brake lever.

### [Brief Description of the Invention]

[Figure 1] A side view of a bicycle to which an embodiment of the present invention is mounted.
[Figure 2] A perspective view of a rear shift operation portion according to the embodiment of the present invention.
[Figure 3] A schematic exploded perspective view of a first embodiment according to the present invention.
[Figure 4] A schematic view of a cable releasing operation thereof.
[Figure 5] A schematic view of a cable releasing operation.
[Figure 6] A schematic view of a cable releasing operation.
[Figure 7] A schematic view of a cable releasing operation.
[Figure 8] A schematic view of a cable releasing operation.
[Figure 9] A schematic view of an operation of a winding lever.
[Figure 10] A schematic view of an operation of a releasing lever.
[Figure 11] An exploded perspective view of a shift operation portion according to a second embodiment of the present invention.
[Figure 12] A plan view of a rear shift operation portion when a positioning pawl is placed in a first engaging position.
[Figure 13] A rear view of the rear shift operation portion when a releasing lever is placed in a neutral position.
[Figure 14] A rear view of the rear shift operation portion when the releasing lever is moved in a first direction.
[Figure 15] A rear view of the rear shift operation portion when the releasing lever is moved in a second direction.
[Figure 16] A partial plan view of a cable releasing operation.
[Figure 17] A partial plan view of the cable releasing operation.
[Figure 18] A partial plan view of the cable releasing operation.

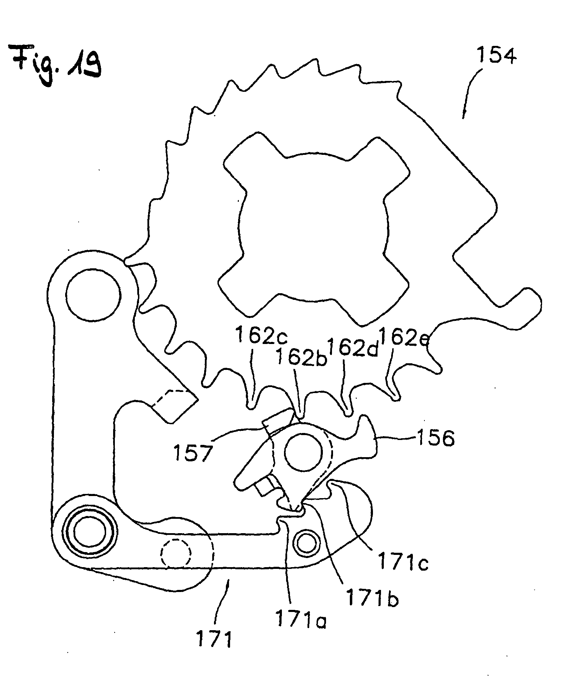

[Figure 19] A partial plan view of the cable releasing operation.

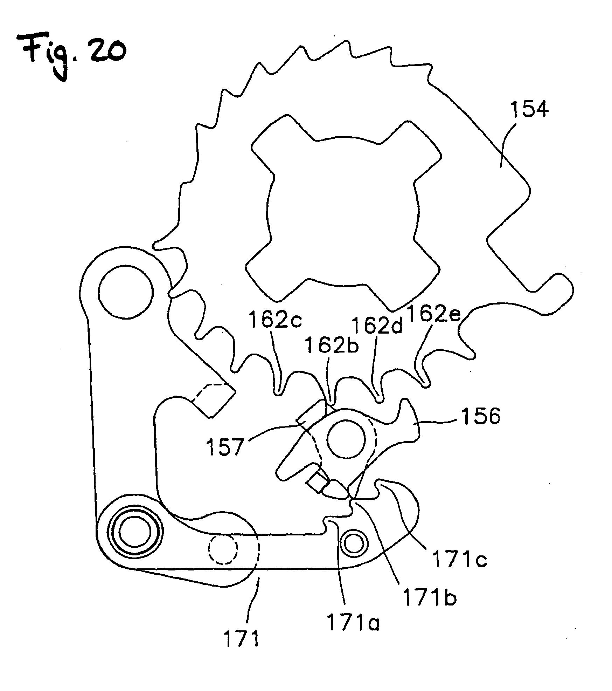

[Figure 20] A partial plan view of the cable releasing operation.

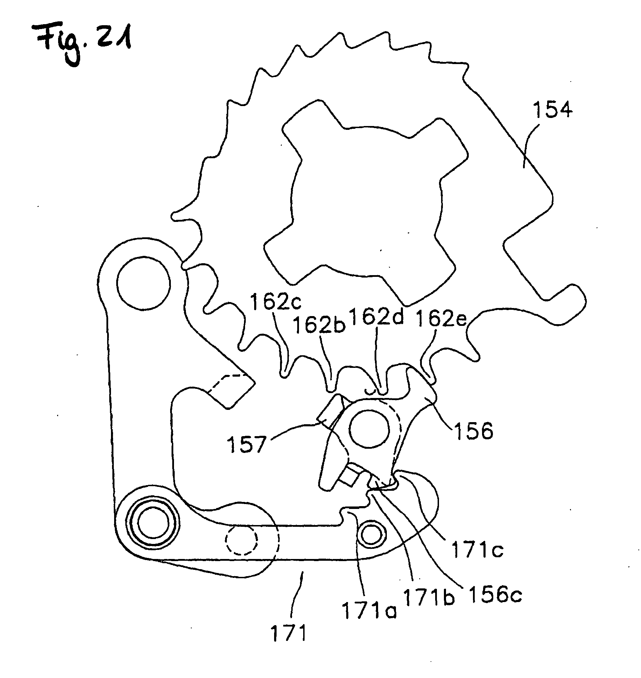

[Figure 21] A partial plan view of the cable releasing operation.
[Figure 22] A bottom view of a shift operation portion according to a third embodiment of the present invention.
[Figure 23] An exploded perspective view thereof.
[Figure 24] An enlarged plan view of a positioning unit, a positioning pawl, and an advance pawl.
[Figure 25A] A schematic view of a cable releasing operation.
[Figure 25B] A schematic view of the cable releasing operation.
[Figure 25C] A schematic view of the cable releasing operation.
[Figure 26A] A schematic view of a cable winding operation.
[Figure 26B] A schematic view of the cable winding operation.
[Figure 26C] A schematic view of the cable winding operation.

### [Description of Symbols]

- 15: front shift operation portion
- 16: rear shift operation portion
- 30: mounting portion
- 130: mounting portion
- 230: mounting portion
- 32: winding body (an example of a cable lock portion)
- 132: winding body (an example of a cable lock portion)
- 232: winding body (an example of a cable lock portion)
- 34: position holding and releasing mechanism
- 134: position holding and releasing mechanism
- 234: position holding and releasing mechanism
- 36: releasing lever (an example of a first operation member)
- 135: releasing lever (an example of a first operation member)
- 236: releasing lever (an example of a first operation member)
- 38: winding lever (an example of a second operation member)
- 138: winding lever (an example of a second operation member)
- 238: winding lever (an example of a second operation member)
- 40: first ratchet
- 44: positioning member
- 46: releasing member
- 46b: second angle protrusion
- 46c: inclined surface
- 50: torsion coil spring (an example of a second urging member)
- 56: coil spring (an example of a first urging member)
- 60: lever member (an example of an input member)
- 62: drive member
- 62a: first angle protrusion
- 62b: inclined surface
- 66: first one-way clutch
- 68: second one-way clutch
- 131: support shaft
- 136: lever member(an example of an input member)
- 136c and 136d: first and second slots
- 139: drive mechanism (an example of a drive member)
- 154, 54: positioning unit
- 156,256: positioning pawl
- 157,257: rotation preventing pawl
- 157c: release cam portion
- 162, 162b, 162c, 162d, 162e, 262: positioning teeth
- 166 and 165: first and second oscillation shafts
- 174: spring member (an example of a third urging member)
- 268: input member
- 270: drive member

## Claims

1. A shift operation device for a bicycle comprising:
a cable lock body (32; 132; 232) movable in two different directions;
a position holding and releasing mechanism (34; 134; 234) that selectively holds said cable lock body in any one of a plurality of holding positions; and **characterized in that** it comprises
a first operation member (36; 136; 236) that is movable in a first direction and a second direction, and operates said position holding and releasing mechanism in response to the movement in said first direction and said second directions to move said cable lock body to only one of said two different directions.

2. A shift operation device for a bicycle according to claim 1, comprising:
a mounting portion (30; 130; 230) mountable to the bicycle;
said cable lock body (32; 132; 232) that is mounted to said mounting portion movably to a cable pulling direction and a cable releasing direction;
said first operation member (36; 136; 236) that is mounted to said mounting portion movably in said first direction and said second direction, and operates said position holding and releasing mechanism in response to the movement in said first direction and said second direction to move said cable lock body in said cable releasing direction.

3. The shift operation device for a bicycle according to claim 2, wherein said position holding and releasing mechanism (34; 134; 234) can shift said holding position of said cable lock body (32; 132; 232) by a plurality of positions in response to the movement of said first operation member (36; 136; 236) in at least any one of said first direction and said second direction.

4. The shift operation device for a bicycle according to anyone of claims 1 to 3, wherein said first operation member (36; 136; 236) has a neutral position, and is moved in said first direction and said second direction from said neutral position.

5. The shift operation device for a bicycle according to any one of claims 2 to 4, wherein said first operation member (36; 136; 236) comprises an input member (60; 136; 268) movable in said first direction and said second direction, and a drive member (62; 139; 270) that is moved by said input member to operate said position holding and releasing mechanism.

6. The shift operation device for a bicycle according to claim 5, wherein said first operation member (36) further includes a first one-way clutch (66) and a second one-way clutch (68) placed between said input member and said drive member.

7. The shift operation device for a bicycle according to claim 6, wherein said first one-way clutch (66) transmits only the movement of said input member (60) in said first direction to said drive member (62), and said second one-way clutch (68) transmits only the movement of said input member in said second direction to said drive member.

8. The shift operation device for a bicycle according to any one of claims 2 to 7, wherein said position holding and releasing mechanism (34) comprises a first ratchet (40; 162; 262) that is moved integrally with said cable lock body (32; 132; 232), and a positioning member (44; 156; 256) that engages said first ratchet and holds said cable lock body in any one of said plurality of holding positions.

9. The shift operation device for a bicycle according to claim 8, wherein said position holding and releasing mechanism (34) further comprises a releasing member (46) that is moved in a third direction in response to the movement of said first operation member in said first direction and said second direction to release the engagement between said first ratchet (40) and said positioning member (44).

10. The shift operation device for a bicycle according to claim 9, wherein said drive member (62) has a plurality of first angle protrusions (62a) each having first inclined surfaces (62b) on opposite sides thereof,
said releasing member (46) is provided in said mounting portion movably in said third direction approaching and separating from said drive member (62) between said drive member and said cable lock body (32) and has second angle protrusions (46b) each having second inclined surfaces that engage said first inclined surfaces of said first angle protrusion, and
said device further comprises a first urging member (56) that urges said releasing member (46) toward said drive member (62).

11. The shift operation device for a bicycle according to any one of claims 2 to 10, further comprising an urging member (50; 150; 250) that urges said cable lock body (32; 132; 232) in said cable releasing direction.

12. The shift operation device for a bicycle according to any one of claims 2 to 11, further comprising a second operation member (38; 138; 238) that is movably mounted to said mounting portion and moves said cable lock body (32; 132; 232) in said cable pulling direction.

13. The shift operation device for a bicycle according to claim 5, wherein said mounting portion includes a first oscillation shaft (166) and a second oscillation shaft (165) spaced apart from said first oscillation shaft, and
said input member (136) oscillates around said first oscillation shaft in the movement in said first direction, and around said second oscillation shaft in the movement in said second direction.

14. The shift operation device for a bicycle according to claim 13, wherein said input member has an arcuate first slot (136c) that engages said first oscillation shaft, and an arcuate second slot (136d) that engages said second oscillation shaft, and
said device further includes an urging member (174) that urges said input member so that said first and second oscillation shafts are placed in one ends of said slots.

15. The shift operation device for a bicycle according to claim 13 or 14, wherein said device further includes a support shaft (131) mounted to said mounting portion and placed in parallel with said first and second oscillation shafts, and
said cable lock body is rotated around said support shaft.

16. The shift operation device for a bicycle according to the claim 15, wherein said position holding and releasing mechanism includes a positioning unit (154) integrally rotatable with said cable lock body and having a plurality of positioning teeth (162), a positioning pawl (156) that oscillates between a first engaging position for engagement with said positioning teeth and a first releasing position for release from said positioning teeth, and a rotation preventing pawl (157) that is movable relative to said positioning pawl within a predetermined range, and placed in a second releasing position for separation from said positioning teeth when said positioning pawl (154) is placed in said first engaging position, and in a second engaging position for engagement with said positioning teeth when said positioning pawl is placed in said first releasing position, and selectively holds said cable lock body in any one of a plurality of holding positions.

17. The shift operation device for a bicycle according to claim 16, wherein each of plurality of operation portions (171a, 171b, 171c) includes an engaging portion (172) that engages said positioning pawl (156), and an engagement releasing portion (173) that releases the engagement with said positioning pawl at said engaging portion by the movement of said rotation preventing pawl (157) within said predetermined range.

18. The shift operation device for a bicycle according to claim 16 or 17, wherein said rotation preventing pawl (157) is rotated relative to said positioning pawl (156) within said predetermined range by said positioning teeth when said rotation preventing pawl is placed in said second engaging position.

19. The shift operation device for a bicycle according to claim 5, wherein said cable lock body is mounted to said mounting portion movably along a first plane,
said position holding and releasing mechanism (134; 234) includes a positioning unit (154; 254) having a plurality of positioning teeth (162; 262), and a positioning pawl (156; 256) that is moved along a surface parallel to said first plane (P) between an engaging position for engagement with said positioning teeth and a releasing position for release from said positioning teeth, and selectively holds said cable lock body (132; 232) in any one of a plurality of holding positions, and
said input member (136; 268) is mounted to said mounting portion movably in a first direction and a second direction, and operates said positioning pawl (156; 256) of said position holding and releasing mechanism according to the movement in said first direction and said second direction to move said cable lock body in said cable releasing direction.

20. The shift operation device for a bicycle according to claim 19, wherein said input member (268) is tiltable in a plurality of directions including said first direction and said second direction from said neutral position, and
said drive member (270) includes a connecting member that connects said input member and said positioning pawl to move said positioning pawl to said releasing position according to the tilt of said input member.

21. The shift operation device for a bicycle according to any one of claims 1 to 20, wherein said first operating member has first and second operation surfaces for operations in said first and second directions.

## Patentansprüche

1. Betätigungsvorrichtung für eine Fahrradgangschaltung, umfassend:
einen Kabelverriegelungskörper (32; 132; 232), beweglich in zwei unterschiedlichen Richtungen;
einen Positionshalte- und -lösemechanismus (34; 134; 234), der selektiv den Kabelverriegelungskörper in einer unter einer Vielzahl von Haltepositionen hält; **dadurch gekennzeichnet, dass** sie umfasst
ein erstes Betätigungselement (36; 136; 236), beweglich in einer ersten Richtung und einer zweiten Richtung, den Positionshalte- und -lösemechanismus betätigend, ansprechend auf die Bewegung in der ersten Richtung und der zweiten Richtung zum Bewegen des Kabelverriegelungskörpers in lediglich einer der zwei unterschiedlichen Richtungen.

2. Betätigungsvorrichtung für eine Fahrradgangschaltung nach Anspruch 1, umfassend:
einen Montageabschnitt (30; 130; 230), an dem Fahrrad montierbar;
wobei der Kabelverriegelungskörper (32; 132; 232) an dem Montageabschnitt beweglich montiert ist in einer Kabelziehrichtung und einer Kabellöse- oder -freigaberichtung;
wobei das erste Betätigungselement (36; 136; 236) an dem Montageabschnitt beweglich montiert ist in der ersten Richtung und der zweiten Richtung und den Positionshalte- und -löse bzw. -freigabemechanismus betätigt, ansprechend auf die Bewegung in der ersten Richtung und der zweiten Richtung, um den Kabelverriegelungskörper in der Kabellöse- bzw. -freigaberichtung zu bewegen.

3. Betätigungsvorrichtung für eine Fahrradgangschaltung nach Anspruch 2, bei welcher der Positionshalte- und -lösemechanismus (34; 134; 234) die Halteposition des Kabelverriegelungskörpers (32; 132; 232) um eine Vielzahl von Positionen schalten bzw. umschalten kann, und zwar ansprechend auf die Bewegung des ersten Betätigungselements (36; 136; 236) in zumindest einer der ersten Richtung und der zweiten Richtung.

4. Betätigungsvorrichtung für eine Fahrradgangschaltung nach einem der Ansprüche 1 bis 3, bei welcher das erste Betätigungselement (36; 136; 236) eine neutrale Position aufweist und bewegt wird in der ersten Richtung und der zweiten Richtung von der neutralen Position.

5. Betätigungsvorrichtung für eine Fahrradgangschaltung nach einem der Ansprüche 2 bis 4, bei welcher das erste Betätigungselement (36; 136; 236) ein Eingabeelement (60; 136; 268) umfasst, beweglich in der ersten Richtung und der zweiten Richtung, sowie ein Antriebselement (62; 139; 270), welches bewegt wird durch das Eingabeelement zum Betätigen des Positionshalte- und -löse bzw. -freigabemechanismus.

6. Betätigungsvorrichtung für eine Fahrradgangschaltung nach Anspruch 5, bei welcher das erste Betätigungselement (36) ferner eine erste Einwegkupplung (66) und eine zweite Einwegkupplung (68) umfasst, angeordnet zwischen dem Eingabeelement und dem Antriebselement.

7. Betätigungsvorrichtung für eine Fahrradgangschaltung nach Anspruch 6, bei welcher die erste Einwegkupplung (66) lediglich die Bewegung des Eingabeelements (60) in der ersten Richtung zu dem Antriebselement (62) überträgt, wobei die zweite Einwegkupplung (68) lediglich die Bewegung des Eingabeelements in der zweiten Richtung zu dem Antriebselement überträgt.

8. Tätigungsvorrichtung für eine Fahrradgangschaltung nach einem der Ansprüche 2 bis 7, bei welcher der Positionshalte- und -lösemechanismus (34) eine erste Rasteinrichtung (40; 162; 262) umfasst, integral bewegt mit dem Kabelverriegelungskörper (32; 132; 232), sowie ein Positionierelement (44; 156; 256), die erste Rasteinrichtung eingreifend und den Kabelverriegelungskörper in einer der Vielzahl von Haltepositionen haltend.

9. Betätigungsvorrichtung für eine Fahrradgangschaltung nach Anspruch 8, bei welcher der Positionshalte- und -lösemechanismus (34) ferner ein Löse- bzw. Auslöse- bzw. Freigabeelement (46) umfasst, bewegt in einer dritten Richtung, und zwar ansprechend auf die Bewegung des ersten Betätigungselements in der ersten Richtung und der zweiten Richtung zum Lösen oder Freigeben des Eingriffes zwischen der ersten Rasteinrichtung (40) und dem Positionierelement (44).

10. Betätigungsvorrichtung für eine Fahrradgangschaltung nach Anspruch 9, bei welcher das Antriebselement (62) eine Vielzahl von ersten Winkelvorsprüngen (62a) aufweist, jeweils mit ersten geneigten Flächen (62b) an entgegengesetzten Seiten davon,
wobei das Auslöse- bzw. Freigabeelement (46) bezüglich des Montageabschnitts beweglich in der dritten Richtung bereitgestellt ist, sich annähernd bzw. entfernend von dem Antriebselement (62) zwischen dem Antriebselement und dem Kabelverriegelungskörper (32) und zweite Winkelvorsprünge (46b) aufweist, jeweils mit zweiten geneigten Flächen, die die ersten geneigten Flächen des ersten Winkelvorsprungs eingreifen, und
wobei die Vorrichtung ferner ein erstes Beaufschlagungselement (56) umfasst, das Auslöse- bzw. Freigabeelement (46) hin zu dem Antriebselement (62) beaufschlagend bzw. vorspannend.

11. Betätigungsvorrichtung für eine Fahrradgangschaltung nach einem der Ansprüche 2 bis 10, ferner umfassend ein Beaufschlagungselement (50; 150; 250), den Kabelverriegelungskörper (32; 132; 232) in der Kabellöse- bzw. -freigaberichtung beaufschlagend bzw. vorspannend.

12. Betätigungsvorrichtung für eine Fahrradgangschaltung nach einem der Ansprüche 2 bis 11, ferner umfassend ein zweites Betätigungselement (38; 138; 238), beweglich montiert an dem Montageabschnitt und den Kabelverriegelungskörper (32; 132; 232) in der Kabelaufzieh- bzw. -ziehrichtung liegend.

13. Betätigungsvorrichtung für eine Fahrradgangschaltung nach Anspruch 5, bei welcher der Montageabschnitt eine erste oszillierende Welle (166) und eine zweite oszillierende Welle (165) umfasst, beabstandet von der ersten oszillierenden Welle, und
wobei das Eingabeelement (136) bezüglich der ersten oszillierenden Welle in der Bewegung in der ersten Richtung oszilliert und bezüglich der zweiten oszillierenden Welle in der Bewegung in der zweiten Richtung.

14. Betätigungsvorrichtung für eine Fahrradgangschaltung nach Anspruch 13, bei welcher das Eingabeelement einen gebogenen oder gekrümmten ersten Schlitz (136c) aufweist, in Eingriff stehend bezüglich der ersten oszillierenden Welle, sowie einen gekrümmten bzw. gebogenen zweiten Schlitz (136d), in Eingriff stehend bezüglich der zweiten oszillierenden Welle,
wobei die Vorrichtung ferner ein Beaufschlagungs- bzw. Vorspannelement (174) enthält, das Eingabeelement derart vorspannend bzw. beaufschlagend, dass die ersten und die zweiten oszillierenden Wellen in einem der Enden der Schlitze angeordnet sind.

15. Betätigungsvorrichtung für eine Fahrradgangschaltung nach Anspruch 13 oder 14, bei welcher die Vorrichtung ferner eine Stützwelle (131) umfasst, montiert bezüglich des Montageabschnitts und angeordnet parallel bezüglich der ersten und zweiten oszillierenden Wellen, wobei der Kabelverriegelungskörper bezüglich der Stützwelle drehbar ist bzw. gedreht wird.

16. Betätigungsvorrichtung für eine Fahrradgangschaltung nach Anspruch 15, bei welcher der Positionshalte- und -lösemechanismus eine Positioniereinheit (154) umfasst, integral drehbar mit dem Kabelverriegelungskörper und aufweisend eine Vielzahl von Positionierzähnen (162), eine Positionierklinke (156), oszillierend zwischen einer ersten Eingriffsposition zum Eingriff mit den Positionierzähnen und einer ersten Freigabeposition zur Freigabe von den Positionierzähnen, sowie eine rotationshemmende oder verhindernde Klinke (157), beweglich relativ zu der Positionierklinke innerhalb eines vorbestimmten Bereiches und angeordnet in einer zweiten Löse- bzw. Freigabeposition zur Trennung von den Positionierzähnen wenn die Positionierklinke (154) in der ersten Eingriffsposition angeordnet ist, und in einer zweiten Eingriffsposition zum Eingriff mit den Positionierzähnen wenn die Positionierklinke in der ersten Auslöse- bzw. Löse- bzw. Freigabeposition angeordnet ist und selektiv den Kabelverriegelungskörper in einer Vielzahl von Haltepositionen hält.

17. Betätigungsvorrichtung für eine Fahrradgangschaltung nach Anspruch 16, bei welcher jeder der Vielzahl von Betätigungsabschnitten (171a; 171b; 171c) einen Eingriffsabschnitt (170) enthält, eingreifend die Positionierklinke (156), sowie einen Eingriffslöse- bzw. -ausrückabschnitt (173), den Eingriff mit der Positionierklinke an dem Eingriffsabschnitt lösend bzw. ausrückend durch die Bewegung der rotationshindernden bzw. - hemmenden Klinke (157) innerhalb des vorbestimmten Bereichs.

18. Betätigungsvorrichtung für eine Fahrradgangschaltung nach Anspruch 16 oder 17, bei welcher die rotationsverhindemde bzw. -hemmende Klinke (157) relativ zu der Positionierklinke (156) innerhalb des vorbestimmten Bereichs durch die Positionierzähne gedreht ist bzw. wird, wenn die rotationshemmende Klinke in der zweiten Eingriffsposition angeordnet ist.

19. Betätigungsvorrichtung für eine Fahrradgangschaltung nach Anspruch 5, bei welcher der Kabelverriegelungskörper in dem Montageabschnitt beweglich montiert ist entlang einer ersten Ebene,
wobei der Positionshalte- und -lösemechanismus (134; 234) eine Positioniereinheit (154; 254) enthält, aufweisend eine Vielzahl von Positionierzähnen (162; 262) und eine Positionierklinke (156; 256), die bewegt ist bzw. wird entlang einer Fläche die parallel zur ersten Ebene P verläuft, und zwar zwischen einer eingerückten bzw. Eingriffs-Position zum Eingriff mit den Positionierzähnen und einer Ausrück- bzw. Auslöse- bzw. Löseposition zum Ausrücken von den Positionszähnen, und selektiv den Kabelverriegelungskörper (132; 232) in einer der Vielzahl von Haltepositionen haltend, und
wobei das Eingabeelement (136; 268) an dem Montageabschnitt beweglich montiert ist in einer ersten Richtung und einer zweiten Richtung und die Positionierklinke (156; 256) des Positionierhalte- und -lösemechanismus betätigt entsprechend der Bewegung in der ersten Richtung und der zweiten Richtung zum Bewegen des Kabelverriegelungskörpers in der Kabellöse- bzw. -freigaberichtung.

20. Betätigungsvorrichtung für eine Fahrradgangschaltung nach Anspruch 19, bei welcher das Eingabeelement (268) kippbar ist in eine Vielzahl von Richtungen, einschließlich der ersten Richtung und der zweiten Richtung, ausgehend von der neutralen Position, wobei vorbezeichnetes Antriebselement (270) ein Verbindungs- oder Anschlusselement umfasst, welche das Eingabeelement und die Positionierklinke verbindet bzw. koppelt, um die Positionierklinke zu der Auslöse- bzw. der Ausrück- bzw. Freigabeposition entsprechend dem Kippen bzw. der Verkippung des Eingabeelementes zu bewegen.

21. Betätigungsvorrichtung für eine Fahrradgangschaltung nach einem der Ansprüche 1 bis 20, bei welcher das erste Betätigungselement erste und zweite Betätigungsflächen für Betätigungen in den ersten und zweiten Richtungen aufweist.

## Revendications

1. Dispositif de manoeuvre de changement de vitesse pour une bicyclette comprenant:
un corps de blocage de câble (32 ; 132 ; 232), qui peut être déplacé dans deux directions différentes,
un mécanisme de maintien et de libération de position (34 ; 134 ; 234), qui maintient sélectivement le corps de blocage de câble dans l'une quelconque d'une pluralité de positions de maintien, et **caractérisé en ce qu'**il comprend
un premier organe de manoeuvre (36 ; 136 ; 236), qui peut être déplacé dans une première direction et dans une deuxième direction, et qui actionne le mécanisme de maintien et de libération de position, en réponse au mouvement dans la première direction et dans la deuxième direction, pour déplacer le corps de blocage de câble dans une seule des deux directions différentes.

2. Dispositif de manoeuvre de changement de vitesse pour une bicyclette selon la revendication 1, comprenant :
- une partie de montage (30 ; 130 ; 230) que l'on peut monter à la bicyclette ;
- le corps de blocage de câble (32 ; 132 ; 232), qui est monté à la partie de montage mobile dans une direction de tirage de câble et dans une direction de libération de câble,
- le premier organe de manoeuvre (36 ; 136 ; 236), qui est monté à ladite partie de montage, mobile dans la première direction et dans la deuxième direction, et qui actionne le mécanisme de maintien et de libération de position, en réponse au mouvement dans la première direction et dans la deuxième direction, pour déplacer le corps de blocage de câble dans la direction de libération de câble.

3. Dispositif de manoeuvre de changement de vitesse pour une bicyclette selon la revendication 2, dans lequel le mécanisme de maintien et de libération de position (34 ; 134 ; 234) peut décaler la position de maintien du corps de blocage de câble (32 ; 132 ; 232) d'une pluralité de positions, en réponse au mouvement du premier organe de manoeuvre (36 ; 136 ; 236) dans au moins l'une quelconque de la première direction et de la deuxième direction.

4. Dispositif de manoeuvre de vitesse selon l'une quelconque des revendications 1 à 3, dans lequel le premier organe de manoeuvre (36 ; 136 ; 236) a une position neutre, et il est déplacé dans la première direction et dans la deuxième direction à partir de la position neutre.

5. Dispositif de manoeuvre de changement de vitesse pour une bicyclette selon l'une quelconque des revendications 2 à 4, dans lequel le premier organe de manoeuvre (36 ; 136 ; 236) comprend un organe d'entrée (60 ; 136 ; 268), qui peut être déplacé dans la première direction et dans la deuxième direction, et un organe d'actionnement (62 ; 139 ; 270), qui est déplacé par l'organe d'entrée pour actionner le mécanisme de maintien et de libération de position.

6. Dispositif de manoeuvre de changement de vitesse pour une bicyclette selon la revendication 5, dans lequel le premier organe de manoeuvre (36) comprend en outre un premier embrayage unidirectionnel (66) et un deuxième embrayage unidirectionnel (68) placé entre l'organe d'entrée et l'organe d'actionnement.

7. Dispositif de manoeuvre de changement de vitesse pour bicyclette selon la revendication 6, dans lequel le premier embrayage unidirectionnel (66) transmet à l'organe d'actionnement (62) uniquement le mouvement de l'organe d'entrée (60) dans la première direction, et le deuxième embrayage unidirectionnel (68) transmet à l'élément d'actionnement uniquement le mouvement de l'organe d'entrée dans la deuxième direction.

8. Dispositif de manoeuvre de changement de vitesse pour une bicyclette selon l'une quelconque des revendications 2 à 7, dans lequel le mécanisme de maintien et de libération de position (34) comprend un premier cliquet (40 ; 162 ; 262) qui est déplacé intégralement avec le corps de blocage de câble (32 ; 132 ; 232), et un organe de positionnement (44 ; 156 ; 256), qui est en prise avec le premier cliquet et qui maintient le corps de blocage de câble dans l'une quelconque de la pluralité de positions de maintien.

9. Dispositif de manoeuvre de changement de vitesse pour une bicyclette selon la revendication 8, dans lequel le mécanisme de maintien et de libération de position (34) comprend en outre un organe de libération (46) qui est déplacé dans une troisième direction, en réponse au mouvement du premier organe de manoeuvre dans la première direction et dans la deuxième direction, pour libérer l'engagement entre le premier cliquet (40) et l'organe de positionnement (44).

10. Dispositif de manoeuvre de changement de vitesse pour une bicyclette selon la revendication 9, dans lequel l'organe d'actionnement (62) a une pluralité de premières protrusions angulaires (62a), chacune ayant des premières surfaces inclinées (62b) sur des côtés opposés des dites protrusions,
l'organe de libération (46) est fourni sur la partie de montage, mobile dans la troisième direction, en approchant et en se séparant de l'organe d'actionnement (62), entre l'organe d'actionnement et le corps de blocage de câble (32), et a des deuxièmes protrusions angulaires (46b), chacune ayant des deuxièmes surfaces inclinées qui sont en prise avec les premières surfaces inclinées des premières protrusions angulaires et, le dispositif comprend en outre un premier organe de rappel (56), qui rappelle l'organe de libération (46) vers l'organe d'actionnement (62).

11. Dispositif de manoeuvre de changement de vitesse pour une bicyclette selon l'une quelconque des revendications 2 à 10, comprenant en outre un organe de rappel (50 ; 150 ; 250), qui rappelle le corps de blocage de câble (132 ; 232) dans la direction de libération de câble.

12. Dispositif de manoeuvre de changement de vitesse pour une bicyclette selon l'une quelconque des revendications 2 à 11, comprenant, en outre, un deuxième organe de manoeuvre (38 ; 138 ; 238), qui est monté mobile à ladite partie de montage, et qui déplace le corps de blocage de câble (32 ; 132 ; 232) dans la direction de tirage de câble.

13. Dispositif de manoeuvre de changement de vitesse pour une bicyclette selon la revendication 5, dans lequel la partie de montage comprend un premier arbre d'oscillation (166), et un deuxième arbre d'oscillation (165) séparé du premier arbre d'oscillation, et
l'organe d'entrée (136) oscille autour du premier arbre d'oscillation dans le mouvement dans la première direction, et autour du deuxième arbre d'oscillation dans le mouvement dans la deuxième direction.

14. Dispositif de manoeuvre de changement de manoeuvre pour une bicyclette selon la revendication 13, dans lequel l'organe d'entrée a une première fente arquée (136c), qui est en prise avec le premier arbre d'oscillation, et une deuxième fente arquée (136d), qui est en prise avec le deuxième arbre d'oscillation, et
le dispositif comprend en outre un organe de rappel (174), qui rappelle l'élément d'entrée de sorte que les premier et deuxième arbres d'oscillation sont placés dans une des extrémités des fentes.

15. Dispositif de manoeuvre de changement de vitesse selon la revendication 13 ou 14, dans lequel le dispositif comprend en outre un arbre de support (131) monté sur la partie de montage et placé en parallèle avec les premier et deuxième arbres d'oscillation, et le corps de blocage de câble tourne autour de l'arbre de support.

16. Dispositif de manoeuvre de changement de vitesse pour une bicyclette selon la revendication 15, dans lequel le mécanisme de maintien et de libération de position comprend une unité de positionnement (154) intégralement rotative avec le corps de blocage de câble et ayant une pluralité de dents de positionnement (162), un cliquet de positionnement (156), qui oscille entre une première position d'engagement, pour un engagement avec les dents de positionnement, et une première position de libération, pour la libération desdites dents de positionnement, et un cliquet d'empêchement de rotation (157), qui peut être déplacé, dans une gamme prédéterminée, par rapport au cliquet de positionnement, et placé dans une deuxième position de libération pour une séparation desdites dents de positionnement, lorsque le cliquet de positionnement (154) est placé dans la première position d'engagement, et dans une deuxième position d'engagement pour un engagement avec lesdites dents de positionnement, lorsque le cliquet de positionnement est placé dans la première position de libération, et maintient sélectivement le corps de blocage de câble dans l'une quelconque d'une pluralité de positions de maintien.

17. Dispositif de manoeuvre de changement de vitesse pour une bicyclette selon la revendication 16, dans lequel chacune de la pluralité des parties de manoeuvre (171a, 171 b, 171 c) comprend une partie d'engagement (172), qui est en prise avec le cliquet de positionnement (156), et une partie de libération d'engagement (173), qui libère l'engagement avec le cliquet de positionnement au niveau de la partie d'engagement, par le mouvement du cliquet d'empêchement de rotation (157) à l'intérieur d'une plage ou gamme prédéterminée.

18. Dispositif de manoeuvre de changement de vitesse pour une bicyclette selon la revendication 16 ou 17, dans lequel le cliquet d'empêchement de rotation (157) est tourné par rapport au cliquet de positionnement (156) à l'intérieur de la gamme prédéterminée par les dents de positionnement, lorsque le cliquet d'empêchement de rotation est placé dans la deuxième position d'engagement.

19. Dispositif de manoeuvre de changement de vitesse pour une bicyclette selon la revendication 5, dans lequel le corps de blocage de câble est monté sur la partie de montage, mobile le long d'une premier plan,
le mécanisme de maintien et de libération de position (134 ; 234), comprend une unité de positionnement (154 ; 254) ayant une pluralité de dents de positionnement (162 ; 262), et un cliquet de positionnement (156 ; 256), qui est déplacé le long d'une surface parallèle au premier plan (P) entre une position d'engagement pour un engagement avec les dents de positionnement, et une position de libération pour libération desdites dents de positionnement, et il maintient sélectivement le corps de blocage de câble (132 ; 232) dans l'une quelconque d'une pluralité de positions de maintien, et
l'organe d'entrée ou de saisie (136 ; 268) est monté sur la partie de montage, mobile dans une première direction et dans une deuxième direction, et il actionne le cliquet de positionnement (156 ; 256) du mécanisme de maintien et de libération de position, selon le mouvement dans la première direction et dans la deuxième direction, pour déplacer le corps de blocage de câble dans ladite direction de libération de câble.

20. Dispositif de manoeuvre de changement de vitesse pour une bicyclette selon la revendication 19, dans lequel l'organe d'entrée (268) peut être incliné dans une pluralité de directions, y compris la première direction et la deuxième direction, à partir de la position neutre, et
l'organe d'actionnement (270) comprend un organe de liaison qui relie l'organe d'entrée et le cliquet de positionnement, pour déplacer le cliquet de positionnement dans la position de libération selon l'inclinaison de l'organe d'entrée.

21. Dispositif de manoeuvre de changement de vitesse pour une bicyclette selon l'une quelconque des revendications 1 à 20, dans lequel le première organe de manoeuvre a des première et deuxième surfaces de manoeuvre, pour des manoeuvres dans les première et deuxième directions.
